# EUROPEAN PATENT SPECIFICATION

(11) **EP 2 753 829 B1**
(45) Date of publication and mention of the grant of the patent: **08.06.2016**
(21) Application number: 12823967.0
(22) Date of filing: 15.08.2012
(51) Int. Cl.: F03G 7/04, F03G 7/05, F01K 27/00

(54) **OCEAN THERMAL ENERGY CONVERSION POWER PLANT**
KRAFTWERK ZUR UMWANDLUNG VON MEERESWÄRMEENERGIE
CENTRALE ÉLECTRIQUE À CONVERSION THERMO-ÉNERGÉTIQUE MARINE

(30) Priority: 15.08.2011 US 201113209865
(43) Date of publication of application: 16.07.2014
(73) Proprietor: The Abell Foundation Inc., Baltimore, Maryland 21202-6174 (US)
(72) Inventor: SHAPIRO, Laurence Jay, Fair Lawn, New Jersey 07410 (US); ROSS, Jonathan, M., Arnold, Maryland 21012 (US); COLE, Barry, R., Mineral, Virginia 23117 (US); MARSON, Bruce Robert, Aberdeen, New Jersey 07747 (US)
(74) Representative: Conroy, John
(86) International application number: PCT/US2012/050933
(87) International publication number: WO 2013/025797

(56) References cited:
- US-A- 4 055 145
- US-A- 4 055 145
- US-A- 4 209 061
- US-A- 4 209 061
- US-A1- 2005 155 749
- US-A1- 2005 155 749
- US-A1- 2009 294 110
- US-A1- 2009 294 110

## Description

### TECHNICAL FIELD

This invention relates to ocean thermal energy conversion power plants and more specifically to floating low heave platform, multi-stage heat engine, ocean thermal energy conversion power plants.

### BACKGROUND

Energy consumption and demand throughout the world has grown at an exponential rate. This demand is expected to continue to rise, particularly in developing countries in Asia and Latin America. At the same time, traditional sources of energy, namely fossil fuels, are being depleted at an accelerating rate and the cost of exploiting fossil fuels continues to rise. Environmental and regulatory concerns are exacerbating that problem.

Solar-related renewable energy is one alternative energy source that may provide a portion of the solution to the growing demand for energy. Solar-related renewable energy is appealing because, unlike fossil fuels, uranium, or even thermal "green" energy, there are few or no climatic risks associated with its use. In addition, solar related energy is free and vastly abundant.

Ocean Thermal Energy Conversion ("OTEC") is a manner of producing renewable energy using solar energy stored as heat in the oceans' tropical regions. Tropical oceans and seas around the world offer a unique renewable energy resource. In many tropical areas (between approximately 20° north and 20° south latitude), the temperature of the surface seawater remains nearly constant. To depths of approximately 30.5 m (100 ft) the average surface temperature of the seawater varies seasonally between 23.9° C and 29.4° C (75° F and 85° F) or more. In the same regions, deep ocean water (between 762 m and 1280 m (2500 ft and 4200 ft) or more) remains a fairly constant 4.4° C (40° F). Thus, the tropical ocean structure offers a large warm water reservoir at the surface and a large cold water reservoir at depth, with a temperature difference between the warm and cold reservoirs of between 1.7° C to 7.2° C (35° F to 45° F). This temperature difference (ΔT) remains fairly constant throughout the day and night, with small seasonal changes.

The OTEC process uses the temperature difference between surface and deep sea tropical waters to drive a heat engine to produce electrical energy. OTEC power generation was identified in the late 1970's as a possible renewable energy source having a low to zero carbon footprint for the energy produced. An OTEC power plant, however, has a low thermodynamic efficiency compared to more traditional, high pressure, high temperature power generation plants. For example, using the average ocean surface temperatures between 26.7° C and 29.4° C (80° F and 85° F) and a constant deep water temperature of 4.4° C (40° F), the maximum ideal Carnot efficiency of an OTEC power plant will be 7.5 to 8%. In practical operation, the gross power efficiency of an OTEC power system has been estimated to be about half the Carnot limit, or approximately 3.5 to 4.0%. Additionally, analysis performed by leading investigators in the 1970's and 1980's, and documented in "Renewable Energy from the Ocean, a Guide to OTEC" William Avery and Chih Wu, Oxford University Press, 1994, indicates that between one quarter to one half (or more) of the gross electrical power generated by an OTEC plant operating with a ΔT of 4.4° C (40° F) would be required to run the water and working fluid pumps and to supply power to other auxiliary needs of the plant. On this basis, the low overall net efficiency of an OTEC power plant converting the thermal energy stored in the ocean surface waters to net electric energy has not been a commercially viable energy production option.

An additional factor resulting in further reductions in overall thermodynamic efficiency is the loss associated with providing necessary controls on the turbine for precise frequency regulation. This introduces pressure losses in the turbine cycle that limit the work that can be extracted from the warm seawater. The resulting net plant efficiency would then be between 1.5% and 2.0%

This low OTEC net efficiency compared with efficiencies typical of heat engines that operate at high temperatures and pressures has led to the widely held assumption by energy planners that OTEC power is too costly to compete with more traditional methods of power production.

Indeed, the parasitic electrical power requirements are particularly important in an OTEC power plant because of the relatively small temperature difference between the hot and cold water. To achieve maximum heat transfer between the warm seawater and the working fluid, and between the cold seawater and the working fluid large heat exchange surface areas are required, along with high fluid velocities. Increasing any one of these factors can increase the parasitic load on the OTEC plant, thereby decreasing net efficiency. An efficient heat transfer system that maximizes the energy transfer in the limited temperature differential between the seawater and the working fluid would increase the commercial viability of an OTEC power plant.

In addition to the relatively low efficiencies with seemingly inherent large parasitic loads, the operating environment of OTEC plants presents design and operating challenges that also decrease the commercial viability of such operations. As previously mentioned, the warm water needed for the OTEC heat engine is found at the surface of the ocean, to a depth of 30.5 m (100 ft) or less. The constant source of cold water for cooling the OTEC engine is found at a depth of between 883 m and 1280 m (2700 ft and 4200 ft) or more. Such depths are not typically found in close proximity to population centers or even land masses. An offshore power plant is required.

Whether the plant is floating or fixed to an underwater feature, a long cold water intake pipe of 610 m (2000 ft) or longer is required. Moreover, because of the large volume of water required in commercially viable OTEC operations, the cold water intake pipe requires a large diameter (typically between 1.8 and 10.7 (6 and 35 feet) or more). Suspending a large diameter pipe from an offshore structure presents stability, connection and construction challenges which have previously driven OTEC costs beyond commercial viability.

Additionally, a pipe having significant length to diameter ratio that is suspended in a dynamic ocean environment can be subjected to temperature differences and varying ocean currents along the length of the pipe. Stresses from bending and vortex shedding along the pipe also present challenges. Additionally, surface influences such as wave action present further challenges with the connection between the pipe and floating platform. A cold water pipe intake system having desirable performance, connection, and construction consideration would increase the commercial viability of an OTEC power plant.

Environmental concerns associated with an OTEC plant have also been an impediment to OTEC operations. Traditional OTEC systems draw in large volumes of nutrient rich cold water from the ocean depths and discharge this water at or near the surface. Such discharge can effect, in a positive or adverse manner, the ocean environment near the OTEC plant, impacting fish stocks and reef systems that may be down current from the OTEC discharge.

US 4,055,145 describes a system for converting ocean thermal energy to electrical power for use in synthesis of anhydrous ammonia and a mariculture operation for raising a selected species of marine fauna. The mariculture operation is carried out in a lagoon located adjacent to a deep ocean region where the surface water temperature is at least 21° C and the deep nutrient-rich water temperature is no more than about 10° C. A separate working fluid, such as ammonia, operates in a Rankine cycle between the warm and cold seawater temperatures. The deep ocean water is used to condense the working fluid and is then mixed with warm surface water that has been used to evaporate the same working fluid in a closed power cycle. The resulting mixture is directed to the lagoon, where the nutrient-rich component contributes to the growth rate of a selected mariculture species. The warm surface water temperature may be increased by creating a monomolecular evaporation retarding layer in the ocean surface surrounding the power plant intake.

### SUMMARY

In some aspects, a power generation plant uses ocean thermal energy conversion processes as a power source.

Further aspects relate to an offshore OTEC power plant having improved overall efficiencies with reduced parasitic loads, greater stability, lower construction and operating costs, and improved environmental footprint. Other aspects include large volume water conduits that are integral with the floating structure. Modularity and compartmentation of the multi-stage OTEC heat engine reduces construction and maintenance costs, limits off-grid operation and improves operating performance. Still further aspects provide for a floating platform having structurally integrated heat exchange compartments and provides for low movement of the platform due to wave action. The integrated floating platform may also provide for efficient flow of the warm water or cool water through the multi-stage heat exchanger, increasing efficiency and reducing the parasitic power demand. Associated systems can promote an environmentally neutral thermal footprint by discharging warm and cold water at appropriate depth/temperature ranges. Energy extracted in the form of electricity reduces the bulk temperature to the ocean.

Further aspects relate to a floating, low heave OTEC power plant having a high efficiency, multi-stage heat exchange system, wherein the warm and cold water supply conduits and heat exchanger cabinets are structurally integrated into the floating platform or structure of the power plant.

In one aspect, a multi-stage heat exchange system includes: a first stage heat exchange rack comprising one or more open-flow plates in fluid communication with a first working fluid flowing through an internal passage in each of the one or more open-flow plates; a second stage heat exchange rack vertically aligned with the first heat exchange rack, the second stage heat exchange rack comprising one or more open-flow plates in fluid communication with a second working fluid flowing through an internal passage in each of the one or more open-flow plates. A non-working fluid flows first through the first stage heat exchange rack and around each of the one or more open-flow plates therein for thermal exchange with the first working fluid and secondly through the second heat exchange rack and around each of the open-flow plates for thermal exchange with the second working fluid.

In one aspect, a multi-stage heat exchange system includes: a first stage heat exchange rack comprising one or more open-flow plates, each plate comprising an exterior surface surrounded by a non-working fluid and an internal passage in fluid communication with a first working fluid flowing through the internal passage; a second stage heat exchange rack vertically aligned with the first heat exchange rack, the second stage heat exchange rack comprising one or more open-flow plates comprising an external surface surrounded by the non-working fluid and an internal passage in fluid communication with a second working fluid flowing through the internal passage; a third stage heat exchange rack vertically aligned with the second stage heat exchange rack, the third stage heat exchange rack comprising one or more open-flow plates comprising an external surface surrounded by the non-working fluid and an internal passage in fluid communication with a third working fluid flowing through the internal passage; a fourth stage heat exchange rack vertically aligned with the third stage heat exchange rack, the fourth stage heat exchange rack comprising one or more open-flow plates comprising an exterior surface surrounded by the non-working fluid and an internal passage in fluid communication with a fourth working fluid flowing through the internal passage. The non-working fluid flows through the first stage heat exchange rack for thermal interaction with the first working fluid before flowing through the second stage heat exchange rack for thermal interaction with the second working fluid. The non-working fluid flows through the second stage heat exchange rack for thermal interaction with the second working fluid before flowing through the third stage heat exchange rack for thermal interaction with the third working fluid. The non-working fluid flows through the third stage heat exchange rack for thermal interaction with the third working fluid before flowing through the fourth stage heat exchange rack for thermal interaction with the fourth working fluid.

In one aspect, an open-flow heat exchange cabinet includes: a first open-flow heat exchange plate comprising; an exterior surface in fluid communication with and surrounded by a non-working fluid; and an internal passage in fluid communication with a working fluid flowing through the internal passage; one or more second open-flow heat exchange plates horizontally aligned with the first open-flow heat exchange plate, wherein each of the one or more second open-flow heat exchange plates comprises: an exterior surface in fluid communication with and surrounded by a non-working fluid; and an internal passage in fluid communication with a working fluid flowing through the internal passage. The first open-flow heat exchange plate is separated from the second heat exchange plate by a gap, the non-working fluid flowing through the gap.

Embodiments of these systems can include one or more of the following features.

In some embodiments, the first working fluid is heated to a vapor and the second working fluid is heated to a vapor having a temperature lower than the vaporous first working fluid. In some cases, the first working fluid is heated to a temperature of between 20.6 and 21.7° C (69 and 71 degrees F). In some cases, the second stage working fluid is heated to a temperature below the temperature of the first stage working fluid and between 20 and 21.1° C (68 and 70 degrees F).

In some embodiments, the first working fluid is cooled to a condensed liquid in the first stage heat exchange rack and the second working fluid is cooled to a condensed liquid in the second stage heat exchange rack, the condensed second stage working fluid having a higher temperature than the condensed first stage working fluid. In some cases, the first working fluid is cooled to a temperature of between 5.6 and 7.8° C (42 and 46 degrees F). In some cases, the second stage working fluid is cooled to a temperature greater than the first stage working fluid and between a temperature of between 7.2 and 8.3° C (45 and 47 degrees F). In some cases, the non-working fluid enters the first stage heat exchange rack at a first temperature and the non-working fluid enters the second stage heat exchange rack at a second lower temperature. In some cases, the non-working fluid enters the first stage heat exchange rack at a temperature of between 3.3 and 6.6° C (38 and 44 degrees F) and leaves the second stage heat exchange rack at a temperature of between 5.6 and 8.9° C (42 and 48 degrees F).

In some embodiments, the flow ratio of the non-working fluid to the working fluid is greater than 2:1.

In some embodiments, the flow ratio of the non-working fluid to the working fluid is between 20:1 and 100:1.

In some embodiments, the first and second stage heat exchange racks form first and second stage cabinets and wherein the non-working fluid flows from the first cabinet to the second cabinet without pressure losses due to piping.

In some embodiments, the open-flow plates reduce pressure losses in the flow of the working fluid due to the absence of nozzles and/or non-working fluid penetrations through the plate.

In some embodiments, the flow path of the working fluids comprises a first flow direction across the flow path of the non-working fluid and a second flow path direction opposite the first flow path direction.

In some embodiments, the first and second working fluids are working fluids in an OTEC system. In some cases, the first and second working fluids are ammonia.

In some embodiments, the non-working fluid is raw water.

In some embodiments, the open-flow plates further comprise front, back, top and bottom external surfaces and the non-working fluid is in contact with all external surfaces.

In some embodiments, the first stage rack further comprises a plurality of open-flow plates in horizontal alignment having a gap between each plate within the first stage rack; the second stage rack further comprises a plurality of open-flow plates in horizontal alignment having a gap between each plate within the second stage racks; and the plurality of open-flow plates and gaps therebetween in the second stage rack are vertically aligned with the plurality of open-flow plates and gaps therebetween in the first stage rack to reduce pressure losses in the flow of the working fluid through the first and second stage racks. In some cases, the heat exchange system also includes a rail for suspending each of the plurality of open-flow plates and a plurality of slots for maintaining the horizontal position of each of the plurality of open-flow plates.

In some embodiments, the first working fluid is heated to a vapor; the second working fluid is heated to a vapor having a temperature lower than the vaporous first working fluid; the third working fluid is heated to a vapor having a temperature lower than the second working fluid; and the fourth working fluid is heated to a vapor lower than the third vapor fluid. In some cases, the first working fluid is heated to temperature of between 20.6 and 21.7° C (69 and 71 degrees F); the second working fluid is heated to a temperature lower than the first working fluid and between 20 and 21.1° C (68 and 70 degrees F); the third working fluid is heated to a temperature below the second working fluid and between 18.9 and 20.6° C (66 and 69 degrees F); and the fourth working fluid is heated to a temperature below the third working fluid and between 17.8 and 19.4° C (64 and 67 degrees F).

In some embodiments, the first working fluid is cooled to a condensed liquid in the first stage heat exchange rack; the second working fluid is cooled to a condensed liquid in the second stage heat exchange rack and has a temperature higher than the condensed first working fluid; the third working fluid is cooled to a condensed liquid in the third heat exchange rack and has a temperature higher than the condensed second working fluid; and the fourth working fluid is condensed to a liquid in the fourth heat exchange rack and has a temperature higher than the condensed third working fluid. In some cases, the first working fluid is condensed to temperature of between 5.6 and 7.8° C (42 and 46 degrees F); the second working fluid is condensed to a temperature higher than the first working fluid and between 7.2 and 8.3° C (45 and 47 degrees F); the third working fluid is condensed to a temperature higher than the second working fluid and between 7.8 and 9.4° C (46 and 49 degrees F); and the fourth working fluid is condensed to a temperature higher the third working fluid and between 9.4 and 11.1° C (49 and 52 degrees F).

In some embodiments, the non-working fluid flows from the first heat exchange rack to the second heat exchange rack, from the second heat exchange rack to the third heat exchange rack, and from the third heat exchange rack to the fourth heat exchange rack without pressure losses due to piping.

In some embodiments, the open-flow plates reduce pressure losses in the flow of the working fluid due to the absence of nozzles and/or non-working fluid penetrations through the plate.

In some embodiments, the flow path of the working fluids comprises a first flow direction across the flow path of the non-working fluid and a second flow path direction opposite the first flow path direction.

In some embodiments, the first stage rack further comprises a plurality of open-flow plates in horizontal alignment having a gap between each plate within the first stage rack; the second stage rack further comprises a plurality of open-flow plates in horizontal alignment having a gap between each plate within the second stage racks; the third stage rack further comprises a plurality of open flow plates in horizontal alignment having a gap between each plate within the third stage rack; the fourth stage rack further comprises a plurality of open flow plates in horizontal alignment having a gap between each plate within the fourth stage rack; and the plurality of open-flow plates and gaps within each rack are vertically aligned with the open-flow plates and gaps in each of the other racks of the other stages so as to reduce pressure losses in the flow of the working fluid through the first and second stage racks.

In some embodiments, the open-flow plates reduce pressure losses in the flow of the working fluid due to the absence of nozzles and/or non-working fluid penetrations through the plate.

Still further aspects include a floating ocean thermal energy conversion power plant. A low heave structure, such as a spar, or modified semi-submersible offshore structure may comprise a first deck portion having structurally integral warm seawater passages, multi-stage heat exchange surfaces, and working fluid passages, wherein the first deck portion provides for the evaporation of the working fluid. A second deck portion is also provided having structurally integral cold seawater passages, multi-stage heat exchange surfaces, and working fluid passages, wherein the second deck portion provides a condensing system for condensing the working fluid from a vapor to a liquid. The first and second deck working fluid passages are in communication with a third deck portion comprising one or more vapor turbine driven electric generators for power generation.

In one aspect, an offshore power generation structure is provided comprising a submerged portion. The submerged portion further comprises a first deck portion comprising an integral multi-stage evaporator system, a second deck portion comprising an integral multi-stage condensing system; a third deck portion housing power generation and transformation equipment; a cold water pipe and a cold water pipe connection.

In a further aspect, the first deck portion further comprises a first stage warm water structural passage forming a high volume warm water conduit. The first deck portion also comprises a first stage working fluid passage arranged in cooperation with the first stage warm water structural passage to warm a working fluid to a vapor. The first deck portion also comprises a first stage warm water discharge directly coupled to a second stage warm water structural passage. The second stage warm water structural passage forms a high volume warm water conduit and comprises a second stage warm water intake coupled to the first stage warm water discharge. The arrangement of the first stage warm water discharge to the second stage warm water intake provides low pressure loss in the warm water flow between the first and second stage. The first deck portion also comprises a second stage working fluid passage arranged in cooperation with the second stage warm water structural passage to warm the working fluid to a vapor. The first deck portion also comprises a second stage warm water discharge.

In a further aspect, the submerged portion further comprises a second deck portion comprising a first stage cold water structural passage forming a high volume cold water conduit. The first stage cold water passage further comprises a first stage cold water intake. The second deck portion also comprises a first stage working fluid passage in communication with the first stage working fluid passage of the first deck portion. The first stage working fluid passage of the second deck portion in cooperation with the first stage cold water structural passage cools the working fluid to a liquid. The second deck portion also comprises a first stage cold water discharge directly coupled to a second stage cold water structural passage forming a high volume cold water conduit. The second stage cold water structural passage comprises a second stage cold water intake. The first stage cold water discharge and the second stage cold water intake are arranged to provide low pressure loss in the cold water flow from the first stage cold water discharge to the second stage cold water intake. The second deck portion also comprises a second stage working fluid passage in communication with the second stage working fluid passage of the first deck portion. The second stage working fluid passage in cooperation with the second stage cold water structural passage cool the working fluid within the second stage working fluid passage to a liquid. The second deck portion also comprises a second stage cold water discharge.

In a further aspect, the third deck portion may comprise a first and second vapor turbine, wherein the first stage working fluid passage of the first deck portion is in communication with the first turbine and the second stage working fluid passage of the first deck portion is in communication with the second turbine. The first and second turbine can be coupled to one or more electric generators.

In still further aspects, an offshore power generation structure is provided comprising a submerged portion, the submerged portion further comprises a four stage evaporator portion, a four stage condenser portion, a four stage power generation portion, a cold water pipe connection, and a cold water pipe.

In one aspect, the four stage evaporator portion comprises a warm water conduit including, a first stage heat exchange surface, a second stage heat exchange surface, a third stage heat exchange surface, and fourth stage heat exchange surface. The warm water conduit comprises a vertical structural member of the submerged portion. The first, second, third and fourth heat exchange surfaces are in cooperation with first, second, third and fourth stage portions of a working fluid conduit, wherein a working fluid flowing through the working fluid conduit is heated to a vapor at each of the first, second, third, and fourth stage portions.

In one aspect, the four stage condenser portion comprises a cold water conduit including a first stage heat exchange surface, a second stage heat exchange surface, a third stage heat exchange surface, and fourth stage heat exchange surface. The cold water conduit comprises a vertical structural member of the submerged portion. The first, second, third and fourth heat exchange surfaces are in cooperation with first, second, third and fourth stage portions of a working fluid conduit, wherein a working fluid flowing through the working fluid conduit is cooled to a liquid at each of the first, second, third, and fourth stage portions, with a progressively higher temperature at each successive stage.

In yet another aspect, first, second, third and fourth stage working fluid conduits of the evaporator portion are in communication with first, second, third and fourth vapor turbines, wherein the evaporator portion first stage working fluid conduit is in communication with a first vapor turbine and exhausts to the fourth stage working fluid conduit of the condenser portion.

In yet another aspect, first, second, third and fourth stage working fluid conduits of the evaporator portion are in communication with first, second, third and fourth vapor turbines, wherein the evaporator portion second stage working fluid conduit is in communication with a second vapor turbine and exhausts to the third stage working fluid conduit of the condenser portion.

In yet another aspect, first, second, third and fourth stage working fluid conduits of the evaporator portion are in communication with first, second, third and fourth vapor turbines, wherein the evaporator portion third stage working fluid conduit is in communication with a third vapor turbine and exhausts to the second stage working fluid conduit of the condenser portion.

In yet another aspect, first, second, third and fourth stage working fluid conduits of the evaporator portion are in communication with first, second, third and fourth vapor turbines, wherein the evaporator portion fourth stage working fluid conduit is in communication with a fourth vapor turbine and exhausts to the first stage working fluid conduit of the condenser portion.

In still a further aspect, a first electrical generator is driven by the first turbine, the fourth turbine, or a combination of the first and fourth turbine.

In still a further aspect, a second electrical generator is driven by the second turbine, the third turbine, or a combination of both the second and third turbine.

Additional aspects can incorporate one or more of the following features: the first and fourth turbines or the second and third turbines produce between 9MW and 60MW of electrical power; the first and second turbines produce approximately 55MW of electrical power; the first and second turbines form one of a plurality of turbo-generator sets in an Ocean Thermal Energy Conversion power plant; the first stage warm water intake is free of interference from the second stage cold water discharge; the first stage cold water intake is free of interference from the second stage warm water discharge; the working fluid within the first or second stage working fluid passages comprises a commercial refrigerant. The working fluid comprises any fluid with suitable thermodynamic properties such as ammonia, propylene, butane, R-134, or R-22; the working fluid in the first and second stage working fluid passages increases in temperature between -11.1 and -4.4° C (12° F and 24° F); a first working fluid flows through the first stage working fluid passage and a second working fluid flows through the second stage working fluid passage, wherein the second working fluid enters the second vapor turbine at a lower temperature than the first working fluid enters the first vapor turbine; the working fluid in the first and second stage working fluid passages decreases in temperature between -11.1 and -4.4° C (12° F and 24° F); a first working fluid flows through the first stage working fluid passage and a second working fluid flows through the second stage working fluid passage, wherein the second working fluid enters the second deck portion at a lower temperature than the first working fluid enters the second deck portion.

Further aspects can also incorporate one or more of the following features: the warm water flowing within the first or second stage warm water structural passage comprises warm seawater, geo-thermally heated water, solar heated reservoir water; heated industrial cooling water, or a combination thereof; the warm water flows between 1900 and 22712 m^3/min (500,000 and 6,000,000 gpm); the warm water flows at 20590 m^3/min (5,440,000 gpm); the warm water flows between 136 kTonnes/hr and 450 kTonnes/hr (300,000,000 lb/hr and 1,000,000,000 lb/hr); the warm water flows at 1.23 kTonnes/hr (2,720,000 lb/hr); the cold water flowing within the first or second stage cold water structural passage comprises cold seawater, cold fresh water, cold subterranean water or a combination thereof; the cold water flows between 950 and 11000 m^3/min (250,000 and 3,000,000 gpm); the cold water flows at 12900 m^3/min (3,420,000 gpm); the cold water flows between 56.7 kTonnes/hr and 794 kTonnes/hr (125,000,000 lb/hr and 1,750,000,000 lb/hr); the cold water flows at 0.776 kTonnes/hr (1,710,000 lb/hr).

Aspects can also incorporate one or more of the following features: the offshore structure is a low heave structure; the offshore structure is a floating spar structure; the offshore structure is a semi-submersible structure.

A still further aspect can include a high-volume, low-velocity heat exchange system for use in an ocean thermal energy conversion power plant, comprising: a first stage cabinet that further comprises a first water flow passage for heat exchange with a working fluid; and a first working fluid passage; and a second stage cabinet coupled to the first stage cabinet, that further comprises a second water flow passage for heat exchange with a working fluid and coupled to the first water flow passage in a manner to limit pressure drop of water flowing from the first water flow passage to the second water flow passage; and a second working fluid passage. The first and second stage cabinets comprise structural members of the power plant.

In one aspect, water flows from the first stage cabinet to the second stage cabinet and the second stage cabinet is beneath the first stage cabinet evaporator. In another aspect, water flows from the first stage cabinet to the second stage cabinet and the second stage cabinet is above the first stage cabinet in the condensers and below the first stage cabinet in the evaporators.

In still a further aspect, a cold water pipe provides cold water from ocean depths to the cold water intake of the OTEC. The cold water intake can be in the second deck portion of the submerged portion of the OTEC plant. The cold water pipe can be a segmented construction. The cold water pipe can be a continuous pipe. The cold water pipe can comprise: an elongated tubular structure having an outer surface, a top end and a bottom end. The tubular structure can further comprise a plurality of first and second stave segments wherein each stave segment has a top portion and a bottom portion, and wherein the top portion of the second stave segment is offset from the top portion of the first staved segment. The cold water pipe can include a strake or ribbon at least partially wound spirally about the outer surface. The first and second staves and/or the strake can comprise polyvinyl chloride (PVC), chlorinated polyvinyl chloride (CPVC), fiber reinforced plastic (FRP), reinforced polymer mortar (RPMP), polypropylene (PP), polyethylene (PE), cross-linked high-density polyethylene (PEX), polybutylene (PB), acrylonitrile butadiene styrene (ABS); polyester, fiber reinforced polyester, vinyl ester, reinforced vinyl ester, concrete, ceramic, or a composite of one or more thereof.

Further aspects include a dynamic connection between the submerged portion of the OTEC plant and the cold water pipe. The dynamic connection can support the weight and dynamic forces of the cold water pipe while it is suspended from the OTEC platform. The dynamic pipe connection can allow for relative movement between the OTEC platform and the cold water pipe. The relative movement can be between 0.5° and 30° from vertical. In one aspect the relative movement can be between 0.5° and 5° from vertical. The dynamic pipe connection can include a spherical or arcuate bearing surface.

In some embodiments, a static connection is provided between the submerged portion of the OTEC plant and the cold water pipe. In these systems, the top of the cold water pipe can be conical and is retracted into a conical receptacle using lines and winches lowered from within the spar. The old water pipe can be retained using locking mechanisms such that the lines can be detached for use in lifting equipment from the lower decks of the spar to the mid-body decks.

In an aspect, a submerged vertical pipe connection comprises a floating structure having a vertical pipe receiving bay, wherein the receiving bay has a first diameter, a vertical pipe for insertion into the pipe receiving bay, the vertical pipe having a second diameter smaller than the first diameter of the pipe receiving bay; a bearing surface; and one or more detents operable with the bearing surface, wherein the detents define a diameter that is different than the first or second diameter when in contact with the bearing surface.

More details of other aspects are described in U.S. Patent Application No. 13/209,893 entitled Ocean Thermal Energy Conversion Power Plant - Cold Water Pipe Connection, and U.S. Patent Application No. 13/209,944 entitled Transferring Heat Between Fluids, filed simultaneously with the present application.

Aspects may have one or more of the following advantages: OTEC power production requires little to no fuel costs for energy production; the low pressures and low temperatures involved in the OTEC heat engine reduce component costs and require ordinary materials compared to the high-cost, exotic materials used in high pressure, high temperature power generation plants; plant reliability is comparable to commercial refrigeration systems, operating continuously for several years without significant maintenance; reduced construction times compared to high pressure, high temperature plants; and safe, environmentally benign operation and power production. Additional advantages may include, increased net efficiency compared to traditional OTEC systems, lower sacrificial electrical loads; reduced pressure loss in warm and cold water passages as well as working fluid flow passages; modular components; less frequent off-grid production time; low heave and reduced susceptibility to wave action; discharge of cooling water below surface levels, intake of warm water free from interference from cold water discharge.

The details of one or more embodiments are set forth in the accompanying drawings and the description below. Other features, objects, and advantages will be apparent from the description and drawings, and from the claims.

### DESCRIPTION OF DRAWINGS

Figure 1 illustrates an exemplary prior-art OTEC heat engine.
Figure 2 illustrates an exemplary prior-art OTEC power plant.
Figure 3 illustrates OTEC structure.
Figure 4 illustrates a deck plan of a heat exchanger deck.
Figure 5 illustrates a heat exchanger cabinet.
Figure 6A illustrates a conventional heat exchange cycle.
Figure 6B illustrates a cascading multi-stage heat exchange cycle.
Figure 6C illustrates a hybrid cascading multi-stage heat exchange cycle.
Figure 6D illustrates the evaporator pressure drop and associate power production.
Figures 7A and B illustrate an exemplary OTEC heat engine.
Figure 8 illustrates a conventional shell and tube heat exchanger.
Figure 9 illustrates a conventional plate heat exchanger.
Figure 10 illustrates a heat exchanger cabinet.
Figure 11 illustrates a perspective view of a heat exchange plate arrangement.
Figure 12 illustrates a perspective view of a heat exchange plate arrangement.
Figure 13 illustrates a side view of a heat exchange plate configuration.
Figure 14 illustrates a P-h diagram of a conventional high temperature steam cycle.
Figure 15 illustrates a P-h diagram of a heat cycle.
Figure 16 illustrates an embodiment of a heat exchange plate.
Figure 17 illustrates an embodiment of a heat exchange plate.
Figure 18 illustrates a portion of a heat exchange plate.
Figures 19A and 19B illustrate an embodiment of a pair of heat exchange plates.
Figures 20A and 20B illustrates an embodiment of a pair of heat exchange plates Like reference symbols in the various drawings indicate like elements.

### DETAILED DESCRIPTION

This disclosure relates to electrical power generation using Ocean Thermal Energy Conversion (OTEC) technology. Aspects relate to a floating OTEC power plant having improved overall efficiencies with reduced parasitic loads, greater stability, and lower construction and operating costs compared to convention OTEC power plants. Other aspects include large volume water conduits that are integral with the floating structure. Modularity and compartmentation of the multi-stage OTEC heat engine reduces construction and maintenance costs, limits off-grid operation and improves operating performance. Still further aspects provide for a floating platform having integrated heat exchange compartments and provides for low movement of the platform due to wave action. The integrated floating platform may also provide for efficient flow of the warm water or cool water through the multi-stage heat exchanger, increasing efficiency and reducing the parasitic power demand. Aspects promote a neutral thermal footprint by discharging warm and cold water at appropriate depth/temperature ranges. Energy extracted in the form of electricity reduces the bulk temperature to the ocean.

OTEC is a process that uses heat energy from the sun that is stored in the Earth's oceans to generate electricity. OTEC uses the temperature difference between the warmer, top layer of the ocean and the colder, deep ocean water. Typically this difference is at least 36° F (20° C). These conditions exist in tropical areas, roughly between the Tropic of Capricorn and the Tropic of Cancer, or even 20° north and south latitude. The OTEC process uses the temperature difference to power a Rankine cycle, with the warm surface water serving as the heat source and the cold deep water serving as the heat sink. Rankine cycle turbines drive generators which produce electrical power.

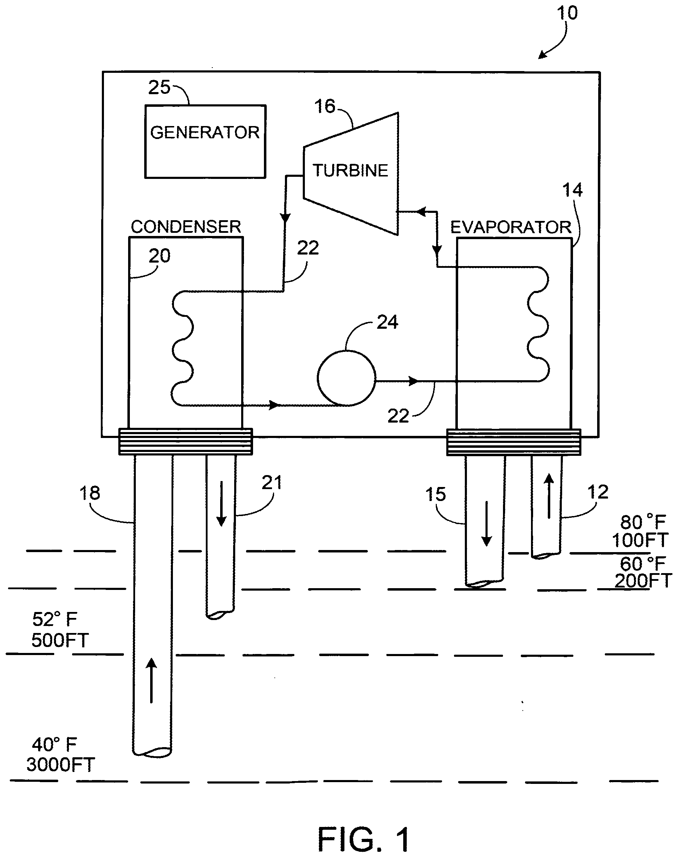

Figure 1 illustrates a typical OTEC Rankine cycle heat engine 10 which includes warm seawater inlet 12, evaporator 14, warm seawater outlet 15, turbine 16, cold seawater inlet 18, condenser 20, cold seawater outlet 21, working fluid conduit 22 and working fluid pump 24.

In operation, heat engine 10 can use any one of a number of working fluids, for example commercial refrigerants such as ammonia. Other working fluids can include propylene, butane, R-22 and R-134a. Other commercial refrigerants can be used. Warm seawater between approximately 23.9° C and 29.4° C (75° F and 85° F), or more, is drawn from the ocean surface or just below the ocean surface through warm seawater inlet 12 and in turn warms the ammonia working fluid passing through evaporator 14. The ammonia boils to a vapor pressure of approximately 0.94 MPascal (9.3 atm). The vapor is carried along working fluid conduit 22 to turbine 16. The ammonia vapor expands as it passes through the turbine 16, producing power to drive an electric generator 25. The ammonia vapor then enters condenser 20 where it is cooled to a liquid by cold seawater drawn from a deep ocean depth of approximately 914 m (3000 ft). The cold seawater enters the condenser at a temperature of approximately 4.4° C (40° F). The vapor pressure of the ammonia working fluid at the temperature in the condenser 20, approximately 10.6° C (51° F), is 0.62 MPascal (6.1 atm). Thus, a significant pressure difference is available to drive the turbine 16 and generate electric power. As the ammonia working fluid condenses, the liquid working fluid is pumped back into the evaporator 14 by working fluid pump 24 via working fluid conduit 22.

The heat engine 10 of Figure 1 is essentially the same as the Rankine cycle of most steam turbines, except that OTEC differs by using different working fluids and lower temperatures and pressures. The heat engine 10 of the Figure 1 is also similar to commercial refrigeration plants, except that the OTEC cycle is run in the opposite direction so that a heat source (e.g., warm ocean water) and a cold heat sink (e.g., deep ocean water) are used to produce electric power.

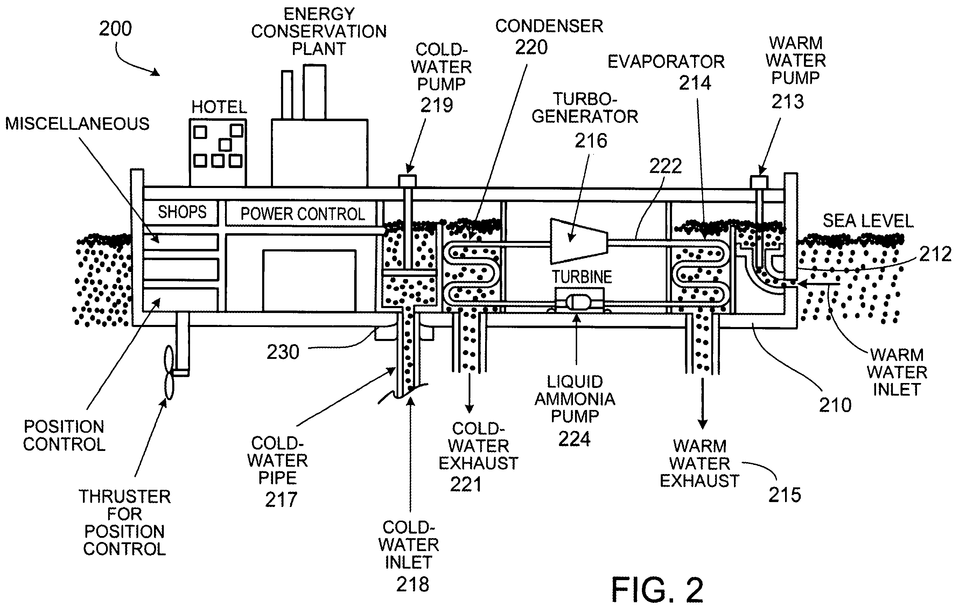

Figure 2 illustrates the components of a floating OTEC power plant 200, which include: the vessel or platform 210, warm seawater inlet 212, warm water pump 213, evaporator 214, warm seawater outlet 215, turbo-generator 216, cold water pipe 217, cold water inlet 218, cold water pump 219, condenser 220, cold water outlet 221, working fluid conduit 222, working fluid pump 224, and pipe connection 230. OTEC plant 200 can also include electrical generation, transformation and transmission systems, position control systems such as propulsion, thrusters, or mooring systems, as well as various auxiliary and support systems (for example, personnel accommodations, emergency power, potable water, black and grey water, firefighting, damage control, reserve buoyancy, and other common shipboard or marine systems.).

Implementations of OTEC power plants utilizing the basic heat engine and system of Figures 1 and 2 have a relatively low overall efficiency of 3% or below. Because of this low thermal efficiency, OTEC operations require the flow of large amounts of water through the power system per kilowatt of power generated. This in turn requires large heat exchangers having large heat exchange surface areas.

Such large volumes of water and large surface areas require considerable pumping capacity in the warm water pump 213 and cold water pump 219, reducing the net electrical power available for distribution to a shore-based facility or on board industrial purposes. Moreover, the limited space of most surface vessels does not easily facilitate large volumes of water directed to and flowing through the evaporator or condenser. Indeed, large volumes of water require large diameter pipes and conduits. Putting such structures in limited space requires multiple bends to accommodate other machinery. And the limited space of typical surface vessels or structures does not easily facilitate the large heat exchange surface area required for maximum efficiency in an OTEC plant. Thus the OTEC systems and vessel or platform have traditionally been large and costly. This has led to an industry conclusion that OTEC operations are a high cost, low yield energy production option when compared to other energy production options using higher temperatures and pressures.

The systems and approaches described herein address technical challenges in order to improve the efficiency of OTEC operations and reduce the cost of construction and operation.

The vessel or platform 210 requires low motions to limit dynamic forces between the cold water pipe 217 and the vessel or platform 210 and to provide a benign operating environment for the OTEC equipment in the platform or vessel. The vessel or platform 210 should also support cold and warm water inlet (218 and 212) volume flows, bringing in sufficient cold and warm water at appropriate levels to ensure OTEC process efficiency. The vessel or platform 210 should also enable cold and warm water discharge via cold and warm water outlets (221 and 215) well below the waterline of vessel or platform 210 to avoid thermal recirculation into the ocean surface layer. Additionally, the vessel or platform 210 should survive heavy weather without disrupting power generating operations.

The OTEC heat engine 10 described herein uses a highly efficient thermal cycle for maximum efficiency and power production. Heat transfer in boiling and condensing processes, as well as the heat exchanger materials and design, limit the amount of energy that can be extracted from each pound of warm seawater. The heat exchangers used in the evaporator 214 and the condenser 220 use high volumes of warm and cold water flow with low head loss to limit parasitic loads. The heat exchangers also provide high coefficients of heat transfer to enhance efficiency. The heat exchangers incorporate materials and designs tailored to the warm and cold water inlet temperatures to enhance efficiency. The heat exchanger design can use a simple construction method with low amounts of material to reduce cost and volume.

The turbo-generators 216 are highly efficient with low internal losses and may also be tailored to the working fluid to enhance efficiency

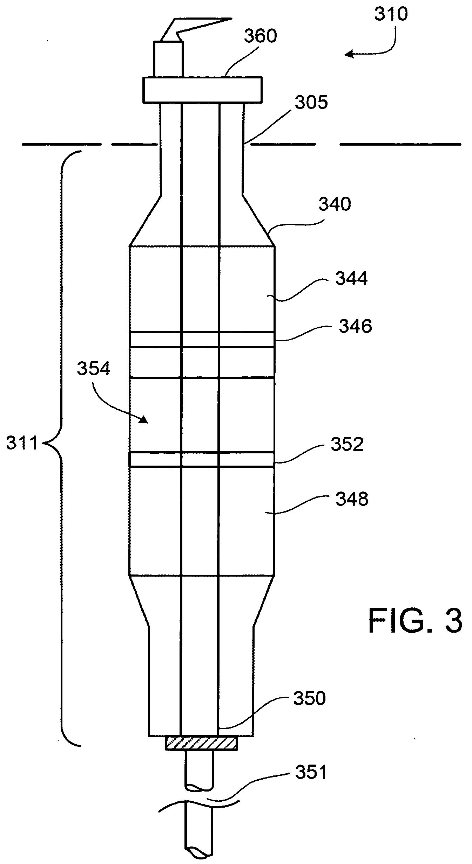

Figure 3 illustrates an implementation of an OTEC system that enhances the efficiency of previous OTEC power plants and overcomes many of the technical challenges associated therewith. This implementation comprises a spar for the vessel or platform, with heat exchangers and associated warm and cold water piping integral to the spar.

OTEC Spar 310 houses an integral multi-stage heat exchange system for use with an OTEC power generation plant. Spar 310 includes a submerged portion 311 below waterline 305. Submerged portion 311 comprises warm water intake portion 340, evaporator portion 344, warm water discharge portion 346, condenser portion 348, cold water intake portion 350, cold water pipe 351, cold water discharge portion 352, machinery deck portion 354, and deck house 360.

In operation, warm seawater of between 23.9° C and 29.4° C (75° F and 85° F) is drawn through warm water intake portion 340 and flows down the spar though structurally integral warm water conduits (not shown). Due to the high volume water flow requirements of OTEC heat engines, the warm water conduits direct flow to the evaporator portion 344 of between 1900 m^3/min and 23000 m^3/min (500,000 gpm and 6,000,000 gpm). The warm water conduits have a diameter of between 1.8 m and 10.7 m (6 ft and 35 ft), or more. Due to this size, the warm water conduits are vertical structural members of spar 310. Warm water conduits can be large diameter pipes structurally joined to the spar and of sufficient strength to contribute to the overall strength of the vertically support spar 310. Alternatively, the warm water conduits can be passages integral to the construction of the spar 310.

Warm water then flows through the evaporator portion 344 which houses one or more stacked, multi-stage heat exchangers for warming a working fluid to a vapor. The warm seawater is then discharged from spar 310 via warm water discharge 346. Warm water discharge can be located or directed via a warm water discharge pipe to a depth at or close to an ocean thermal layer that is approximately the same temperature as the warm water discharge temperature to limit environmental impacts. The warm water discharge can be directed to a sufficient depth to avoid thermal recirculation with either the warm water intake or cold water intake.

Cold seawater is drawn from a depth of between 762 and 1280 m (2500 and 4200 ft), or more, at a temperature of approximately 4.4° C (40° F), via cold water pipe 351. The cold seawater enters spar 310 via cold water intake portion 350. Due to the high volume water flow requirements of OTEC heat engines, the cold seawater conduits direct flow to the condenser portion 348 of between 1900 m^3/min and 13000 m^3/min (500,000 gpm and 3,500,000 gpm). Such cold seawater conduits have a diameter of between 1.8 m and 10.7 m (6 ft and 35 ft), or more. Due to this size, the cold seawater conduits are vertical structural members of spar 310. Cold water conduits can be large diameter pipes structurally joined to the spar and of sufficient strength to contribute to the overall strength of the spar 310. Alternatively, the cold water conduits can be passages integral to the construction of the spar 310.

Cold seawater then flows upward to stacked multi-stage condenser portion 348, where the cold seawater cools a working fluid to a liquid. The cold seawater is then discharged from spar 310 via cold seawater discharge 352.

Machinery deck portion 354 can be positioned vertically between the evaporator portion 344 and the condenser portion 348. Positioning machinery deck portion 354 beneath evaporator portion 344 allows nearly straight line warm water flow from intake, through the multi-stage evaporators, and to discharge. Positioning machinery deck portion 354 above condenser portion 348 allows nearly straight line cold water flow from intake, through the multi-stage condensers, and to discharge. Machinery deck portion 354 includes turbo-generators 356. In operation, warm working fluid heated to a vapor flows from evaporator portion 344 to one or more turbo-generators 356. The working fluid expands in turbo-generator 356 thereby driving a turbine for the production of electrical power. The working fluid then flows to condenser portion 348 where it is cooled to a liquid and pumped to evaporator portion 344.

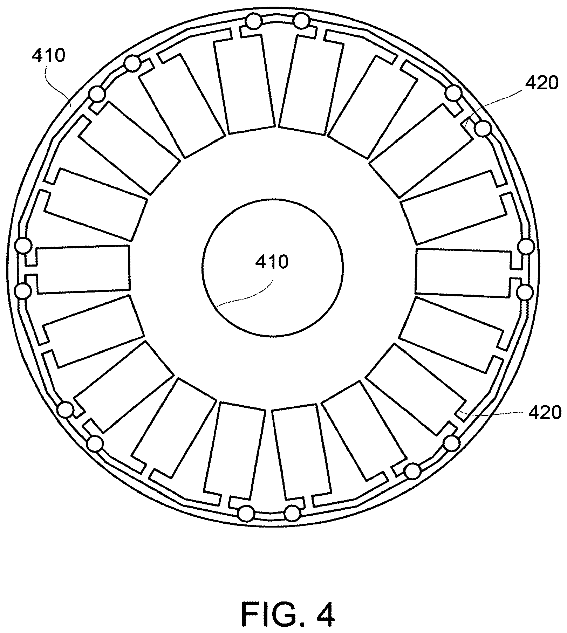

Figure 4 illustrates an implementation of an OTEC system wherein a plurality of multi-stage heat exchangers 420 is arranged about the periphery of OTEC spar 410. Heat exchangers 420 can be evaporators or condensers used in an OTEC heat engine. The peripheral layout of heat exchanges can be used with evaporator portion 344 or condenser portion 348 of an OTEC spar platform. The peripheral arrangement can support any number of heat exchangers (e.g., 1 heat exchanger, between 2 and 8 heat exchangers, 8-16 heat exchanger, 16 - 32 heat exchangers, or 32 or more heat exchangers). One or more heat exchangers can be peripherally arranged on a single deck or on multiple decks (e.g., on 2, 3, 4, 5, or 6 or more decks) of the OTEC spar 410. One or more heat exchangers can be peripherally offset between two or more decks such that no two heat exchangers are vertically aligned over one another. One or more heat exchangers can be peripherally arranged so that heat exchangers in one deck are vertically aligned with heat exchanges on another adjacent deck.

Individual heat exchangers 420 can comprise a multi-stage heat exchange system (e.g., a 2, 3, 4, 5, or 6 or more heat exchange system). In some embodiments, individual heat exchangers 420 are heat exchanger cabinets constructed to provide low pressure loss in the warm seawater flow, cold seawater flow, and working fluid flow through the heat exchanger.

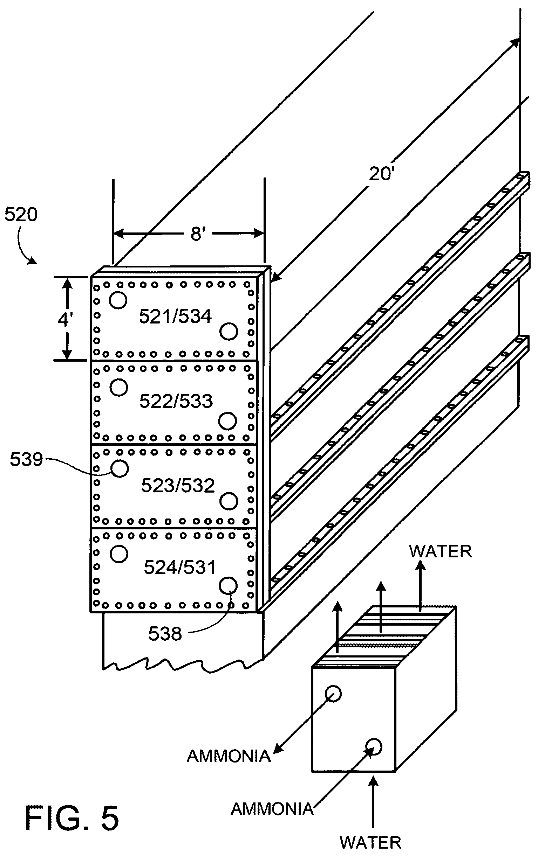

Referring to Figure 5, an embodiment of a heat exchanger cabinet 520 includes multiple heat exchange stages, 521, 522, 523 and 524. In some implementations, the stacked heat exchangers accommodate warm seawater flowing down through the cabinet, from first evaporator stage 521, to second evaporator stage 522, to third evaporator stage 523 to fourth evaporator stage 524. In another embodiment of the stacked heat exchange cabinet, cold seawater flows up through the cabinet from first condenser stage 531, to second condenser stage 532, to third condenser stage 533, to fourth condenser stage 534. Working fluid flows through working fluid supply conduits 538 and working fluid discharge conduits 539. In an embodiment, working fluid conduits 538 and 539 enter and exit each heat exchanger stage horizontally as compared to the vertical flow of the warm seawater or cold seawater. The vertical multi-stage heat exchange design of heat exchanger cabinet 520 facilitates an integrated vessel (e.g., spar) and heat exchanger design, removes the requirement for interconnecting piping between heat exchanger stages, and ensures that virtually all of the heat exchanger system pressure drop occurs over the heat transfer surface.

The heat transfer surface efficiency can be improved using surface shape, treatment and spacing as described herein. Material selection such as alloys of aluminum offer superior economic performance over traditional titanium base designs. The heat transfer surface can comprise 100 Series, 3000 Series, or 5000 Series aluminum alloys. The heat transfer surface can comprise titanium and titanium alloys.

It has been found that the multi-stage heat exchanger cabinet enables high energy transfer to the working fluid from the seawater within the relatively low available temperature differential of the OTEC heat engine. The thermodynamic efficiency of any OTEC power plant is a function of how close the temperature of the working fluid approaches that of the seawater. The physics of the heat transfer dictate that the area required to transfer the energy increases as the temperature of the working fluid approaches that of the seawater. Increasing the velocity of the seawater can increase the heat transfer coefficient to offset the increase in surface area. However, increasing the velocity of the seawater can greatly increases the power required for pumping, thereby increasing the parasitic electrical load on the OTEC plant.

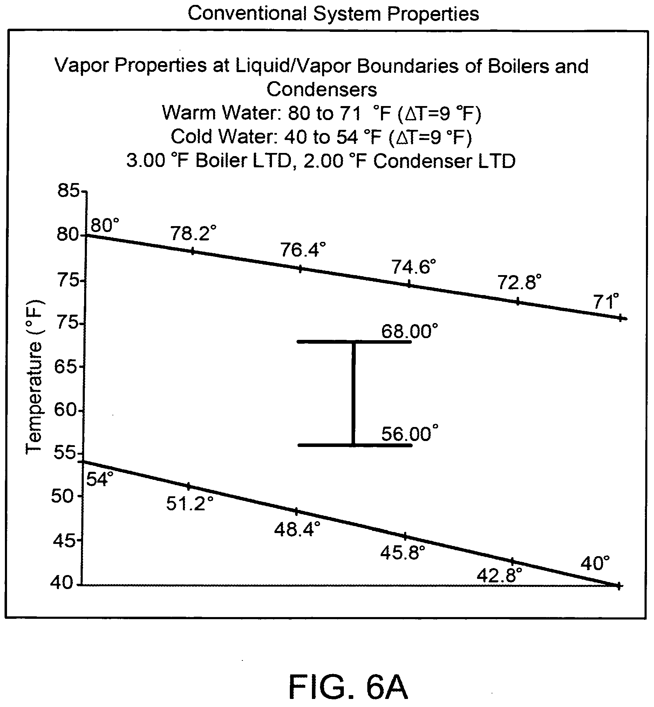

Figure 6A illustrates an OTEC cycle wherein the working fluid is boiled in a heat exchanger using warm surface seawater. The fluid properties in this conventional Rankine cycle are constrained by the boiling process that limits the leaving working fluid to approximately -16.1° C (3° F) below the leaving warm seawater temperature. In a similar fashion, the condensing side of the cycle is limited to being no close than 2° F higher than the leaving cold seawater temperature. The total available temperature drop for the working fluid is approximately -11.1° C (12° F) (between 20° C and 13.3° C (68° F and 56° F)).

It has been found that a cascading multi-stage OTEC cycle allows the working fluid temperatures to more closely match that of the seawater. This increase in temperature differential increases the amount of work that can be done by the turbines associated with the OTEC heat engine.

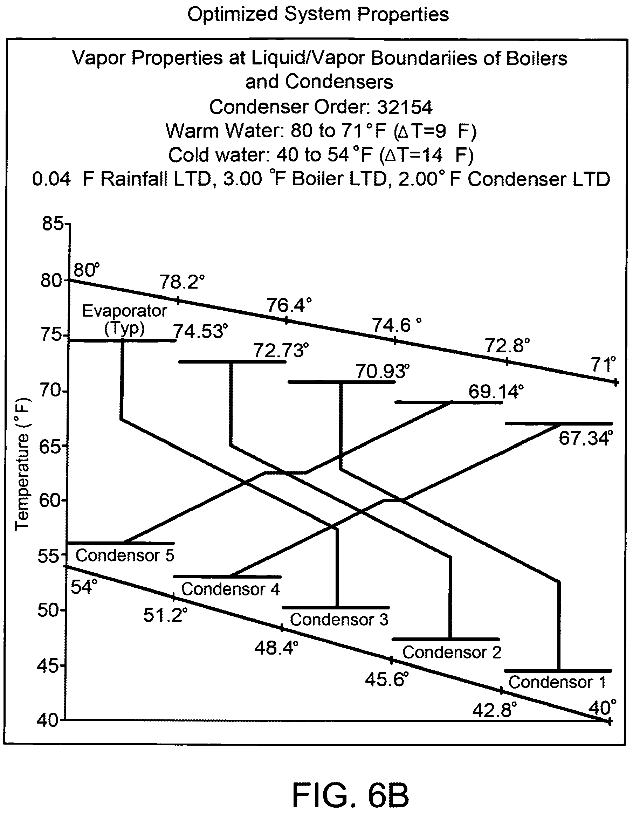

Figure 6B illustrates a cascading multi-stage OTEC cycle using multiple steps of boiling and condensing to expand the available working fluid temperature drop. Each step requires an independent heat exchanger, or a dedicated heat exchanger stage in the heat exchanger cabinet 520 of Figure 5. The cascading multi-stage OTEC cycle of Figure 6b allows for matching the output of the turbines with the expected pumping loads for the seawater and working fluid. This highly efficient design would require dedicated and customized turbines.

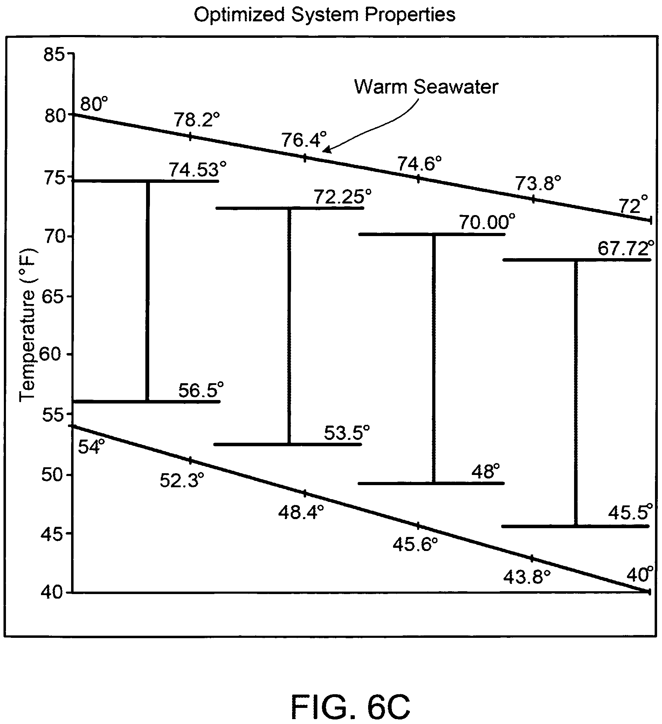

Figure 6C illustrates a hybrid yet still efficient cascading OTEC cycle that facilitates the use of identical equipment (e.g., turbines, generators, pumps) while retaining the thermodynamic efficiencies or optimization of the true cascade arrangement of Figure 6B. In the hybrid cascade cycle of Figure 6C, the available temperature differential for the working fluid ranges from about -7.8° C to about -5.6° C (18° F to about 22° F). This narrow range allows the turbines in the heat engine to have identical performance specifications, thereby lowering construction and operation costs.

System performance and power output are greatly increased using the hybrid cascade cycle in an OTEC power plant. Table A compares the performance of the conventional cycle of Figure 6A with that of the hybrid cascading cycle of Figure 6C.

**Table A**

| **Estimated Performance for 100MW Net Output** | | |
|---|---|---|
| | Conventional Cycle | Four Stage Hybrid Cascade Cycle |
| Warm Seawater Flow | 18000 m^3/min | 14000 m^3/min |
| | (4,800,000 GPM) | (3,800,000 GPM) |
| Cold Seawater Flow | 13000 m^3/min (3,520,000 GPM) | 8630 m^3/min (2,280,000 GPM) |
| Gross Heat Rate | 0.172 GJ/kWH | 0.1165 GJ/kWH |
| | (163,000 BTU/kWH) | (110,500 BTU/kWH) |

Utilizing the four stage hybrid cascade heat exchange cycle reduces the amount of energy that needs to be transferred between the fluids. This in turn serves to reduce the amount of heat exchange surface that is required.

The performance of heat exchangers is affected by the available temperature difference between the fluids as well as the heat transfer coefficient at the surfaces of the heat exchanger. The heat transfer coefficient generally varies with the velocity of the fluid across the heat transfer surfaces. Higher fluid velocities require higher pumping power, thereby reducing the net efficiency of the plant. A hybrid cascading multi-stage heat exchange system facilitates lower fluid velocities and greater plant efficiencies. The stacked hybrid cascade heat exchange design also facilitates lower pressure drops through the heat exchanger. The vertical plant design also facilitates lower pressure drop across the whole system.

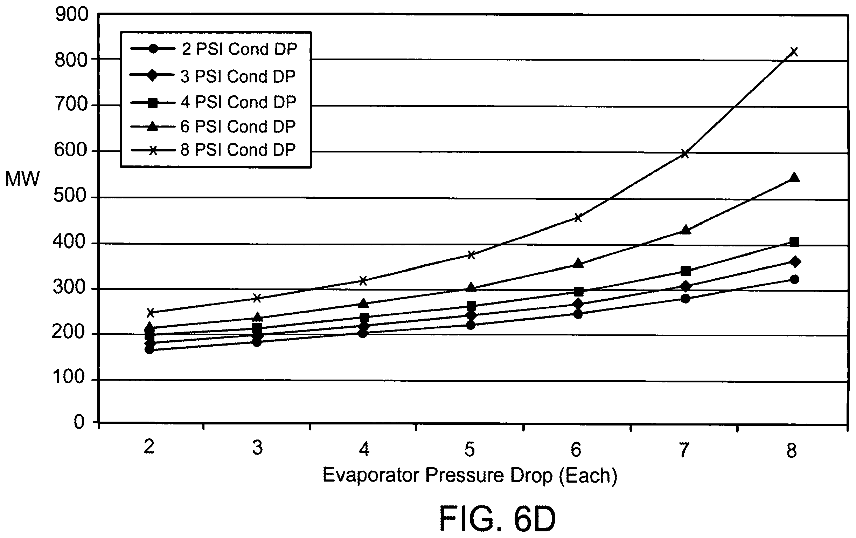

Figure 6D illustrates the impact of heat exchanger pressure drop on the total OTEC plant generation to deliver 100MW to a power grid. Limiting pressure drop through the heat exchanger greatly enhances the OTEC power plant's performance. Pressure drop is reduced by providing an integrated vessel or platform - heat exchanger system, wherein the seawater conduits form structural members of the vessel and allow for seawater flow from one heat exchanger stage to another in series. An approximate straight line seawater flow, with low changes in direction from intake into the vessel, through the pump, through the heat exchange cabinets and in turn through each heat exchange stage in series, and ultimate discharging from the plant, allows for low pressure drop.

### Cascade Hybrid OTEC Power Generation:

An integrated multi-stage OTEC power plant can produce electricity using the temperature differential between the surface water and deep ocean water in tropical and subtropical regions. Traditional piping runs for seawater can be eliminated by using the off-shore vessel's or platform's structure as a conduit or flow passage. Alternatively, the warm and cold seawater piping runs can use conduits or pipes of sufficient size and strength to provide vertical or other structural support to the vessel or platform. These integral seawater conduit sections or passages serve as structural members of the vessel, thereby reducing the requirements for additional steel. As part of the integral seawater passages, multi-stage heat exchanger cabinets provides multiple stages of working fluid evaporation without the need for external water nozzles or piping connections. The integrated multi-stage OTEC power plant allows the warm and cold seawater to flow in their natural directions. The warm seawater flows downward through the vessel as it is cooled before being discharged into a cooler zone of the ocean. In a similar fashion, the cold seawater from deep in the ocean flows upward through the vessel as it is warmed before discharging into a warmer zone of the ocean. This arrangement avoids the need for changes in seawater flow direction and associated pressure losses. The arrangement also reduces the pumping energy required.

Multi-stage heat exchanger cabinets allow for the use of a hybrid cascade OTEC cycle. These stacks of heat exchangers comprise multiple heat exchanger stages or sections that have seawater passing through them in series to boil or condense the working fluid as appropriate. In the evaporator section, the warm seawater passes through a first stage where it boils off some of the working fluid as the seawater is cooled. The warm seawater then flows down the stack into the next heat exchanger stage and boils off additional working fluid at a slightly lower pressure and temperature. This occurs sequentially through the entire stack. Each stage or section of the heat exchanger cabinet supplies working fluid vapor to a dedicated turbine that generates electrical power. Each of the evaporator stages has a corresponding condenser stage at the exhaust of the turbine. The cold seawater passes through the condenser stacks in a reverse order to the evaporators.

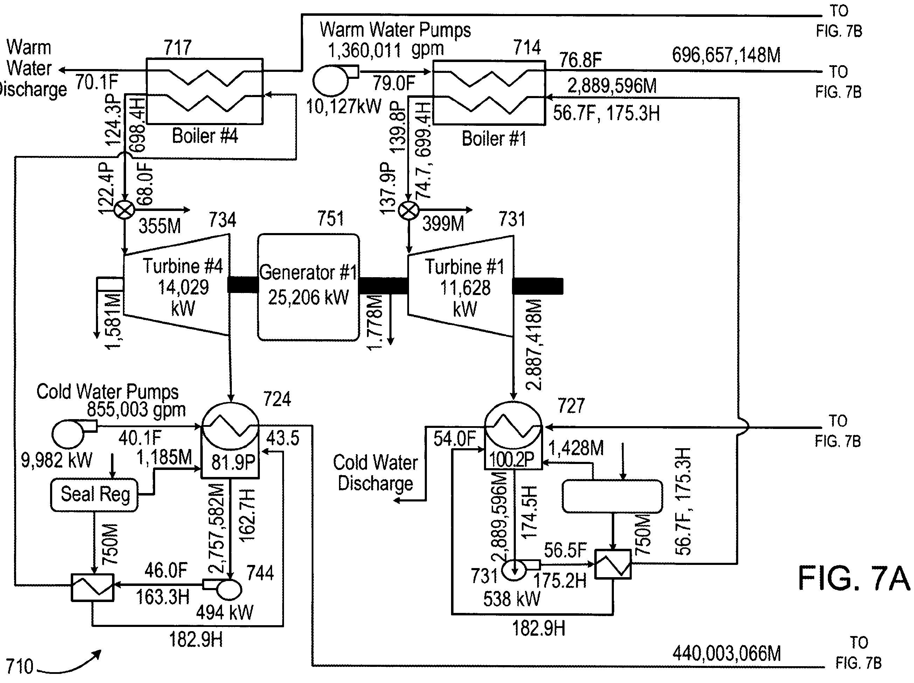

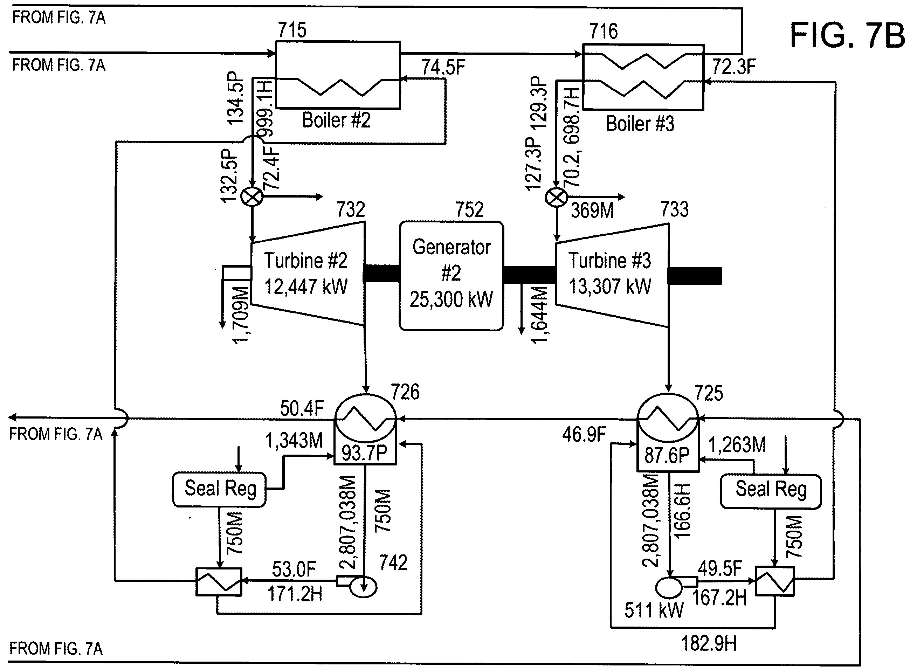

Referring to Figures 7A and 7B, an exemplary multi-stage OTEC heat engine 710 utilizes a hybrid cascading heat exchange cycles. Warm seawater is pumped from a warm seawater intake (not shown) by warm water pump 712, discharging from the pump at approximately 5150 m^3/min (1,360,000 gpm) and at a temperature of approximately 26.1° C (79° F). All or parts of the warm water conduit from the warm water intake to the warm water pump, and from the warm water pump to the stacked heat exchanger cabinet can form integral structural members of the vessel.

From the warm water pump 712, the warm seawater then enters a first stage evaporator 714 where it boils a first working fluid. The warm water exits the first stage evaporator 714 at a temperature of approximately 24.9° C (76.8° F) and flows down to a second stage evaporator 715.

The warm water enters the second stage evaporator 715 at approximately 24.9° C (76.8° F) where it boils a second working fluid and exits the second stage evaporator 715 at a temperature of approximately 23.6° C (74.5°).

The warm water flows down to a third stage evaporator 716 from the second stage evaporator 715, entering at a temperature of approximately 23.6° C (74.5° F), where it boils a third working fluid. The warm water exits the third stage evaporator 716 at a temperature of approximately 22.4° C (72.3° F).

The warm water then flows from the third stage evaporator 716 down to the fourth stage evaporator 717, entering at a temperature of approximately 22.4° C (72.3° F), where it boils a fourth working fluid. The warm water exits the fourth stage evaporator 717 at a temperature of approximately 21.2° C (70.1° F) and then discharges from the vessel. Though not shown, the discharge can be directed to a thermal layer at an ocean depth of approximately the same temperature as the discharge temperature of the warm seawater. Alternately, the portion of the power plant housing the multi-stage evaporator can be located at a depth within the structure so that the warm water is discharged to an appropriate ocean thermal layer. In some embodiments, the warm water conduit from the fourth stage evaporator to the warm water discharge of the vessel can comprise structural members of the vessel.

Similarly, cold seawater is pumped from a cold seawater intake (not shown) via cold seawater pump 722, discharging from the pump at approximately 3236.54 m^3/min (855,003 gpm) and at a temperature of approximately 4.4° C (40.0° F). The cold seawater is drawn from ocean depths of between approximately 883 and 1280 m (2700 and 4200 ft), or more. The cold water conduit carrying cold seawater from the cold water intake of the vessel to the cold water pump, and from the cold water pump to the first stage condenser can comprise in its entirety or in part structural members of the vessel.

From cold seawater pump 722, the cold seawater enters a first stage condenser 724, where it condenses the fourth working fluid from the fourth stage boiler 717. The cold seawater exits the first stage condenser at a temperature of approximately 6.4° C (43.5° F) and flows up to a second stage condenser 725.

The cold seawater enters the second stage condenser 725 at approximately 6.4° C (43.5° F) where it condenses the third working fluid from third stage evaporator 716. The cold seawater exits the second stage condenser 725 at a temperature approximately 8.3° C (46.9° F) and flows up to a third stage condenser 726.

The cold seawater enters the third stage condenser 726 at a temperature of approximately 8.3° C (46.9° F) where it condenses the second working fluid from second stage evaporator 715. The cold seawater exits the third stage condenser 726 at a temperature approximately 10.2° C (50.4° F).

The cold seawater then flows up from the third stage condenser 726 to a fourth stage condenser 727, entering at a temperature of approximately 10.2° C (50.4° F). In the fourth stage condenser, the cold seawater condenses the first working fluid from the first stage evaporator 714. The cold seawater then exits the fourth stage condenser at a temperature of approximately 10.2° C (54.0° F) and ultimately discharges from the vessel. The cold seawater discharge can be directed to a thermal layer at an ocean depth of or approximately the same temperature as the discharge temperature of the cold seawater. Alternately, the portion of the power plant housing the multi-stage condenser can be located at a depth within the structure so that the cold seawater is discharged to an appropriate ocean thermal layer.

The first working fluid enters the first stage evaporator 714 at a temperature of 13.7° C (56.7° F) where it is heated to a vapor with a temperature of 23.7° C (74.7° F). The first working fluid then flows to first turbine 731 and then to the fourth stage condenser 727 where the first working fluid is condensed to a liquid with a temperature of approximately 13.6° C (56.5° F). The liquid first working fluid is then pumped via first working fluid pump 741 back to the first stage evaporator 714.

The second working fluid enters the second stage evaporator 715 at a temperature approximately 11.7° C (53.0° F) where it is heated to a vapor. The second working fluid exits the second stage evaporator 715 at a temperature approximately 22.4° C (72.4° F). The second working fluid then flow to a second turbine 732 and then to the third stage condenser 726. The second working fluid exits the third stage condenser at a temperature approximately 11.7° C (53.0° F) and flows to working fluid pump 742, which in turn pumps the second working fluid back to the second stage evaporator 715.

The third working fluid enters the third stage evaporator 716 at a temperature approximately 9.7° C (49.5° F) where it will be heated to a vapor and exit the third stage evaporator 716 at a temperature of approximately 21.2° C (70.2° F). The third working fluid then flows to third turbine 733 and then to the second stage condenser 725 where the third working fluid is condensed to a fluid at a temperature approximately 9.7° C (49.5° F). The third working fluid exits the second stage condenser 725 and is pumped back to the third stage evaporator 716 via third working fluid pump 743.

The fourth working fluid enters the fourth stage evaporator 717 at a temperature of approximately 7.8° C (46.0° F) where it will be heated to a vapor. The fourth working fluid exits the fourth stage evaporator 717 at a temperature approximately 20° C (68.0° F) and flow to a fourth turbine 734. The fourth working fluid exits fourth turbine 734 and flows to the first stage condenser 724 where it is condensed to a liquid with a temperature approximately 7.8° C (46.0° F). The fourth working fluid exits the first stage condenser 724 and is pumped back to the fourth stage evaporator 717 via fourth working fluid pump 744.

The first turbine 731 and the fourth turbine 734 cooperatively drive a first generator 751 and form first turbo-generator pair 761. First turbo-generator pair will produce approximately 25MW of electric power.

The second turbine 732 and the third turbine 733 cooperatively drive a second generator 752 and form second turbo-generator pair 762. Second turbo-generator pair 762 will produce approximately 25MW of electric power.

The four stage hybrid cascade heat exchange cycle of Figure 7 allows the maximum amount of energy to be extracted from the relatively low temperature differential between the warm seawater and the cold seawater. Moreover, all heat exchangers can directly support turbo-generator pairs that produce electricity using the same component turbines and generators.

It will be appreciated that multiple multi-stage hybrid cascading heat exchangers and turbo-generator pairs can be incorporated into a vessel or platform design.

### Multi-stage, Open-flow, Heat Exchange Cabinets

OTEC systems, by their nature require large volumes of water, for example, a 100 megawatt OTEC power plant can require, for example, up to orders of magnitude more water than required for a similarly sized combustion fired steam power plant. In an exemplary implementation, a 25MW OTEC power plant can require approximately 3800 m^3 (1,000,000 gallons) per minute of warm water supply to the evaporators and approximately 3300 m^3 (875,000 gallons) per minute of cold water to the condensers. The energy required for pumping water together with the small temperature differentials (approximately 1.7 to 7.2° C (35 to 45 degrees F)) act to drive down efficiency while raising the cost of construction.

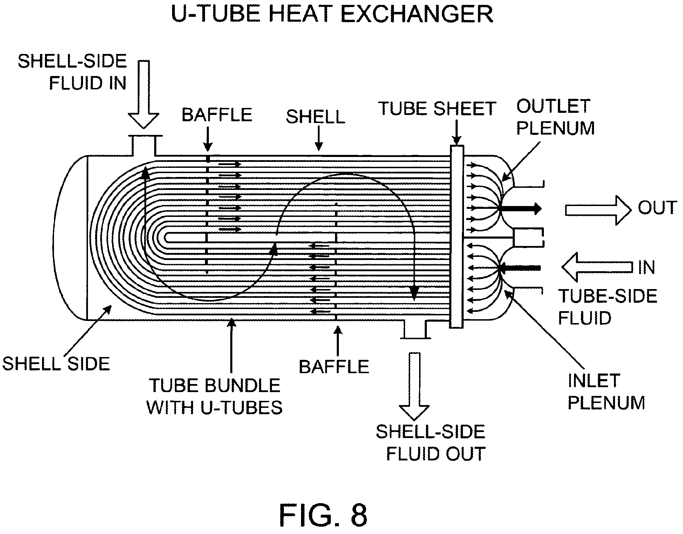

Presently available heat exchangers are insufficient to handle the large volumes of water and high efficiencies required for OTEC heat exchange operations. Shell and tube heat exchangers consist of a series of tubes. One set of these tubes contains the working fluid that must be either heated or cooled. The second non-working fluid runs over the tubes that are being heated or cooled so that it can either provide the heat or absorb the heat required. A set of tubes is called the tube bundle and can be made up of several types of tubes: plain, longitudinally finned, etc. Shell and tube heat exchangers are typically used for high-pressure applications. This is because the shell and tube heat exchangers are robust due to their shape. Shell and tube exchangers are not ideal for the low temperature differential, low pressure, high volume nature of OTEC operations. For example, shell and tube heat exchangers, as shown in Fig. 8, typically require complicated piping arrangements with high pressure losses and associated piping energy. These types of heat exchangers are difficult to fabricate, install and maintain, particularly in a dynamic environment such as an offshore platform. Shell and tube heat exchanges also require precision assembly particularly for the shell to tube connections and for the internal supports. Moreover, shell and tube heat exchangers often have a low heat transfer coefficient and are restricted in the volume of water that can be accommodated.

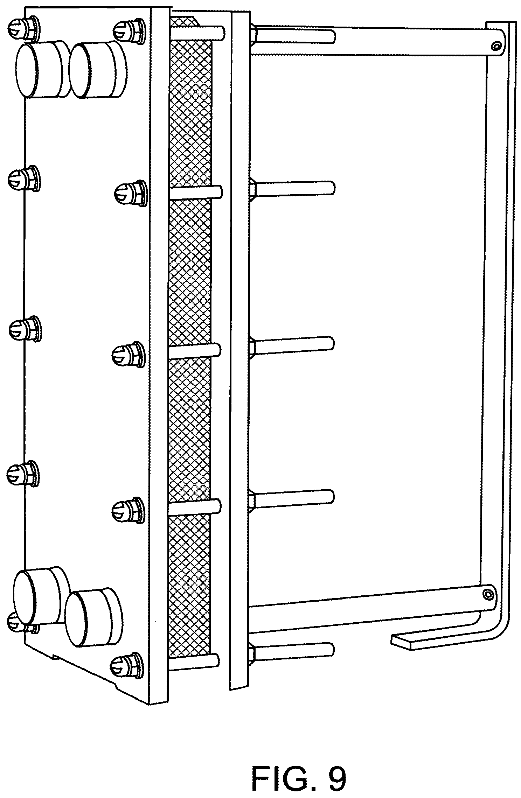

Figure 9 depicts a plate heat exchanger. Plate heat exchangers can include multiple, thin, slightly-separated plates that have very large surface areas and fluid flow passages for heat transfer. This stacked-plate arrangement can be more effective, in a given space, than the shell and tube heat exchanger. Advances in gasket and brazing technology have made the plate-type heat exchanger increasingly practical. In HVAC applications for example, large heat exchangers of this type are called plate-and-frame; when used in open loops, these heat exchangers are normally of the gasket type to allow periodic disassembly, cleaning, and inspection. Permanently-bonded plate heat exchangers, such as dip-brazed and vacuum-brazed plate varieties, are often specified for closed-loop applications such as refrigeration. Plate heat exchangers also differ in the types of plates that are used, and in the configurations of those plates. Some plates may be stamped with "chevron" or other patterns, where others may have machined fins and/or grooves.

Plate heat exchangers, however, have some significant disadvantages in OTEC applications. For example, these types of heat exchangers can require complicated piping arrangements that do not easily accommodate the large volumes of water needed with OTEC systems. Often, gaskets must be precisely fitted and maintained between each plate pair, and significant bolting is needed to maintain the gasket seals. Plate heat exchangers typically require complete disassembly to inspect and repair even one faulty plate. Materials needed for plate heat exchangers can be limited to costly titanium and/or stainless steel. These types of heat exchangers require relatively equal flow areas between the working and non-working fluids. Flow ratios between the fluids are typically 1:1. As can be seen in Figure 9, supply and discharge ports are typically provided on the face of the plate, reducing the total heat exchange surface area and complicating the flow path of each of the working and non-working fluids. Moreover, plate heat exchangers include complex internal circuiting for nozzles that penetrate all plates.

In order to overcome the limitations of such conventional heat exchangers, a gasket-free, open flow heat exchanger is provided. In some implementations, individual plates are horizontally aligned in a cabinet such that a gap exists between each plate. A flow path for the working fluid runs through the interior of each plate in a pattern providing high heat transfer (e.g., alternating serpentine, chevrons, z-patterns, and the like). The working fluid enters each plate through connections on the side of the plates so as to reduce obstructions in the face of the plate or impediments to the water flow by the working fluid. The non-working fluid, such as raw water, flows vertically through the cabinet and fills the gaps between each of the open-flow plates. In some implementations, the non-working fluid is in contact with all sides of the open-flow plates or in contact with just the front and back surfaces of the open-flow plates.

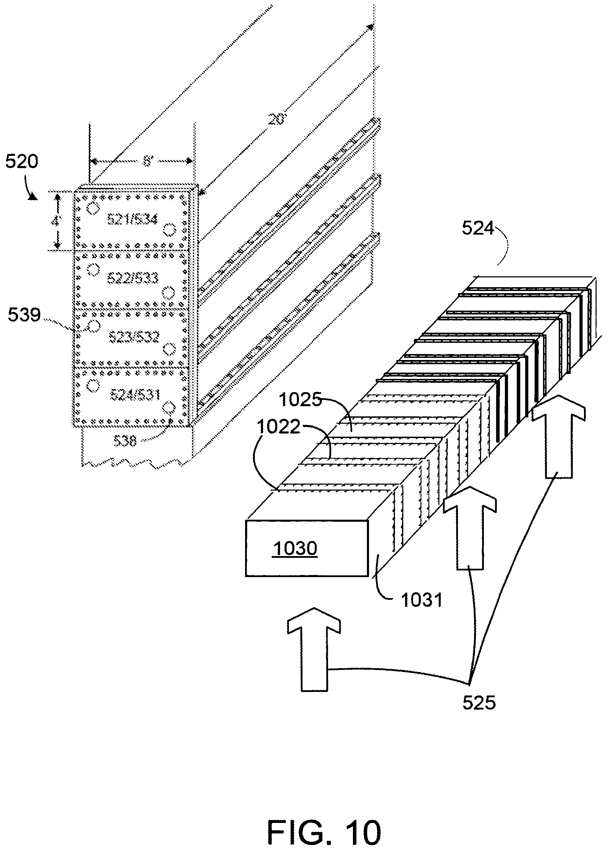

Figure 10 illustrates a stacked cabinet arrangement 520 of heat exchangers, similar to the arrangement as described in Figure 5, with a detail of a single cabinet 524 having a rack of multiple heat exchange plates 1022. The non-working fluid flows vertically through the cabinet 524 and past each of the plates 1022 in the rack. Arrow 1025 indicates the flow direction of the water. The flow direction of the water can be from top to bottom or bottom to top. In some embodiments, the flow direction can be in the natural direction of the water as it is heated or cooled. For example, when condensing a working fluid, the water can flow through the cabinet arrangement from bottom to top in the natural flow of convection as the water is warmed. In another example, when evaporating a working fluid, the water can flow from top to bottom as the water cools.

Referring to Fig. 10, open-flow heat exchange cabinet 524 includes cabinet face 1030 and cabinet side 1031. Opposite of cabinet face 1030 is cabinet face 1032 (not shown) and opposite of cabinet side 1031 is cabinet side 1033 (not shown). The cabinet faces and sides form a plenum or water conduit through which the raw water non-working fluid flows with little to no pressure losses due to piping.

In contrast to the gasket heat exchanger described above with respect to Figure 9, the open flow heat exchanger uses the cabinet to form a flow chamber containing the non-working fluid (e.g., seawater) rather than using gaskets between plates to form the flow chamber containing the non-working fluid. Thus, the open-flow heat exchange cabinet 524 is effectively gasket-free. This important aspect of this system provides significant advantages over other plate and frame heat exchangers that rely on gaskets to isolate the working fluid from the energy providing medium (e.g., seawater). Corrosion testing of aluminum plate and frame heat exchangers done at NELHA in the 1980s and 1990s had to stop after only about six months because there was so much leakage around the gaskets where biological deposits caused extensive erosion. The applicants identified gasket issues as a major impediment to using a plate and frame design in an OTEC system.

In addition, the cabinet approach combined with side mounted inlet and outlet ports for the heat exchange plates avoids the needs for the supply and discharge ports typically provided on the face of the plate heat exchange systems (see, e.g., Figure 9). This approach increases the total heat exchange surface area of each plate as well as simplifying the flow path of both the working and non-working fluids. Removing the gaskets between the plates also removes significant obstructions that can cause resistance to flow. The gasket-free open-flow heat exchange cabinets can reduce back pressure and associated pumping demand, thus reducing the parasitic load of an OTEC plant and resulting in increased power that can be delivered to the utility company.

In the case of an OTEC condenser, cabinet 524 is open on the bottom to the cold raw water supply, and open on the top to provide unobstructed fluid communication with the cabinet 523 above. The final cabinet in the vertical series 521 is open at the top to the raw water discharge system.

In the case of an evaporator, cabinet 521 is open on the top to the warm raw water supply and open at the bottom to provide unobstructed fluid communication to the cabinet below 522. The final cabinet 524 in the vertical series is open on the bottom to the warm raw water discharge system.

Within each of the heat exchange cabinets, a plurality of open-flow heat exchange plates 1022 are arranged in horizontal alignment to provide a gap 1025 between each pair of plates 1022. Each open flow plate has a front face, a back face, a top surface, a bottom surface, and left and right sides. The plates 1022 are arranged in horizontal alignment so that the back face of a first plate faces the front face of a second plate immediately behind the first plate. A working fluid supply and discharge are provided on the sides of each of the plates to avoid impediments to the flow of the raw water through the gaps 1025 as the raw water flows past the front and back faces of the plurality of plates 1022 in the rack. Each of the plates 1022 includes a working fluid flow passage that is internal to the plate. Open-flow plates 1022 are described in greater detail further below.

In some implementations, each individual plate 1022 has a dedicated working fluid supply and discharge such that the working fluid flows through a single plate. Supply of the working fluid is directly to one or more of working fluid supply passages. In other implementations, the working fluid can flow through two or more plates in series before being discharged from the heat exchange cabinet to the reminder of the working fluid system.

It will be appreciated that each heat exchanger cabinet 524, 523, 522, and 521 has similar components and is vertically aligned such that the horizontally aligned plates 1022 in one cabinet vertically align over the plates in the cabinet below. The gaps 1025 between plates 1022 on one cabinet vertically align over the gaps 1025 between plates 1022 in the cabinet below.

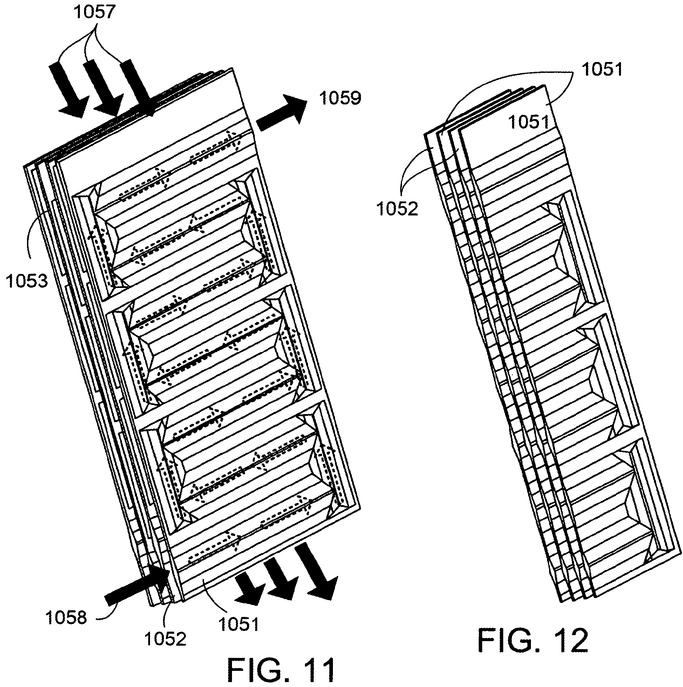

Referring to Figs. 11 and 12, an exemplary implementation of the plate arrangement in heat exchange cabinet 524 includes a first open-flow heat exchange plate 1051 having an exterior surface including at least a front and back face. The exterior surface is in fluid communication with and surrounded by a non-working fluid 1057 such as cold raw water. The first open flow plate also includes an internal passage in fluid communication with a working fluid 1058 flowing through the internal passage. At least one more second open-flow heat exchange plate 1052 is horizontally aligned with the first open-flow heat exchange plate 1051 such that the front exterior surface of the second plate 1052 faces the back exterior surface of the first plate 1051. Like the first plate, the at least one second plate 1052 includes an exterior surface in fluid communication with and surrounded by the non-working fluid 1057, and an internal passage in fluid communication with a working fluid 1058 flowing through the internal passage. The first open-flow heat exchange plate 1051 is separated from the second heat exchange plate 1052 by a gap 1053. The non-working fluid 1057 flows through the gap.

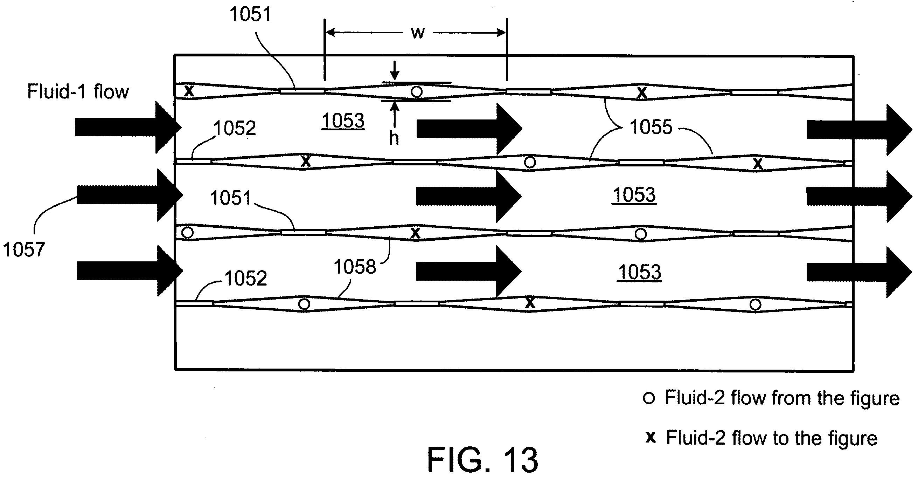

Figure 13 depicts a side view of an exemplary open-flow heat exchange cabinet 524 including a first open flow heat exchange plate 1051, a second heat exchange plate 1052, and gaps 1053 separating each first plate 1051 and 1052. The working fluid 1058 flows through the internal working fluid flow passages 1055.

As described above, in some implementations, a single heat exchange cabinet can be dedicated to a single stage of a hybrid cascade OTEC cycle. In some implementations, four heat exchange cabinets are vertically aligned, as depicted and described in Figure 5. In other implementations, cabinets having working fluid supply and discharge lines connected to the sides of each plate can be used. This avoids working fluid conduits being on the face of the plates and impeding the flow of both the working fluid and the non-working fluid.

For example, a gasket-free multi-stage heat exchange system can include a first stage heat exchange rack comprising one or more open-flow plates in fluid communication with a first working fluid flowing through an internal passage in each of the one or more open-flow plates. The working fluid can be supplied and discharged from each plate via supply and discharge lines dedicate to each individual plate. A second stage heat exchange rack vertically aligned with the first heat exchange rack is also included. The second stage heat exchange rack comprising one or more open-flow plates in fluid communication with a second working fluid flowing through an internal passage in each of the one or more open-flow plates. Again, the second working fluid is supplied and discharged to and from each individual plate through lines dedicated to each individual plate. A non-working fluid, such as raw water, flows first through the first stage heat exchange rack and around each of the one or more open-flow plates allowing for thermal exchange with the first working fluid. The non-working fluid then passes through the second heat exchange rack and around each of the open-flow plates allowing for thermal exchange with the second working fluid.

The first stage rack includes a plurality of open-flow plates in horizontal alignment having a gap between each plate. The second stage rack also includes a plurality of open-flow plates in horizontal alignment having a gap between each plate within the second stage racks. The plurality of open-flow plates and gaps in the second stage rack are vertically aligned with the plurality of open-flow plates and gaps in the first stage rack. This reduces pressure losses in the flow of the non-working fluid through the first and second stage racks. Pressure losses in the non-working fluid are also reduced by having the non-working fluid directly discharge from one cabinet to the next thereby eliminating the need for extensive and massive piping systems. In some embodiments, the walls of the cabinets containing the first and second stage racks of heat exchange plates form the conduit through which the non-working fluid flows.

Due to the open-flow arrangement of the plates in each rack of each stage of an exemplary four stage OTEC system, the flow ratio of the non-working fluid to the working fluid is increased from the typical 1:1 of most conventional plate heat exchanger systems. In some implementations, the flow ratio of the non-working fluid is greater than 1:1, (e.g., greater than 2:1, greater than 10:1, greater than 20: 1, greater than 30:1, greater than 40:1, greater than 50:1, greater than 60:1, greater than 70:1, greater than 80:1, greater than 90:1 or greater than 100:1).

When a multi-stage arrangement of heat exchange cabinets is used as a condenser, the non-working fluid (e.g., the cold seawater) generally enters the first stage cabinet at a temperature lower than when the non-working fluid enters the second stage cabinet, and the non-working fluid then enters the second stage cabinet at a temperature lower than when the non-working fluid entered the third stage cabinet; and the non-working fluid enters the third stage cabinet at a temperature generally lower than when it enters the fourth stage cabinet.

When a multi-stage arrangement of heat exchange cabinets are used as an evaporator, the non-working fluid (e.g., the warm seawater) generally enters the first stage cabinet at a temperature higher than when the non-working fluid enters the second stage cabinet, and the non-working fluid then enters the second stage cabinet at a temperature higher than when the non-working fluid enters the third stage cabinet; and the non-working fluid enters the third stage cabinet at a temperature generally higher than when it enters the fourth stage cabinet.

When a multi-stage arrangement of heat exchange cabinets are used as an condenser, the working fluid (e.g., the ammonia) generally exits the first stage cabinet a temperature lower than when the working fluid exits the second stage cabinet, and the working fluid exits the second stage cabinet at a temperature lower than the working fluid exits the third stage cabinet; and the working fluid exits the third stage cabinet at a temperature generally lower than when it exits the fourth stage cabinet.

When a multi-stage arrangement of heat exchange cabinets are used as an evaporator, the working fluid (e.g., the ammonia) generally exits the first stage cabinet at a temperature higher than the working fluid exiting the second stage cabinet, and the working fluid exits the second stage cabinet at a temperature generally higher than the working fluid exits the third stage cabinet; and the working fluid exits the third stage cabinet at a temperature generally higher than when it exits the fourth stage cabinet.

An exemplary heat balance of an implementation of a four stage OTEC cycle is described herein and generally illustrates these concepts.

In some implementations, a four stage, gasket-free, heat exchange system includes a first stage heat exchange rack having one or more open-flow plates, each plate includes an exterior surface having at least a front and back face surrounded by a non-working fluid. Each plate also includes an internal passage in fluid communication with a first working fluid flowing through the internal passage. The working fluid is supplied and discharged from each plate by supply and discharge lines dedicated to each plate.

The four-stage heat exchange system also includes second stage heat exchange rack vertically aligned with the first heat exchange rack, the second stage heat exchange rack includes one or more open-flow heat exchange plates substantially similar to those of the first stage and vertically aligned with the plates of the first stage.

A third stage heat exchange rack, substantially similar to the first and second stage racks is also included and is vertically aligned with the second stage heat exchange rack. A fourth stage heat exchange rack substantially similar to the first, second and third stage racks is included and vertically aligned with the third stage heat exchange rack.

In operation, the non-working fluid flows through the first stage heat exchange rack and surrounds each open-flow plate therein for thermal interaction with the first working fluid flowing within the internal flow passages of each plate. The non-working fluid then flows through the second stage heat exchange rack for thermal interaction with the second working fluid. The non-working fluid then flows through the second stage heat exchange rack for thermal interaction with the second working fluid before flowing through the third stage heat exchange rack for thermal interaction with the third working fluid. The non-working fluid flows through the third stage heat exchange rack for thermal interaction with the third working fluid before flowing through the fourth stage heat exchange rack for thermal interaction with the fourth working fluid. The non-working fluid is then discharged from the heat exchange system.

### Free-Flow Heat Exchange Plates:

The low temperature differential of OTEC operations (typically between 35 degrees F and 85 degrees F) requires a heat exchange plate design free of obstructions in the flow of the non-working fluid and the working fluid. Moreover the plate must provide enough surface area to support the low temperature lift energy conversion of the working fluid.

Conventional power generation systems typically use combustion process with a large temperature lift system such as a steam power cycle. As environmental issues and unbalanced fossil fuel supply issues become more prevalent, Low Temperature Lift Energy Conversion (LTLEC) systems, such as the implementations of OTEC systems described herein, and which use renewable energy sources such as solar thermal and ocean thermal, will become more important. While conventional steam power cycles uses exhaust gas from combustion process and are usually at very high temperatures, the LTLEC cycles use low temperature energy sources ranging from 30 to 100 degrees C. Therefore, the temperature difference between the heat source and heat sink of the LTLEC cycle is much smaller than that of the steam power cycle.

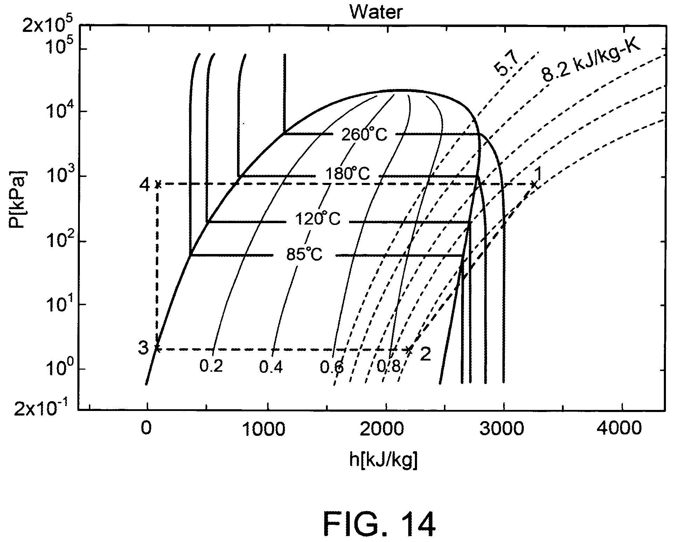

Figure 14 shows the process of a conventional high temperature steam power cycle in a pressure-enthalpy (P-h) diagram. Thermal efficiency of the steam power cycle is in the range of 30 to 35%.

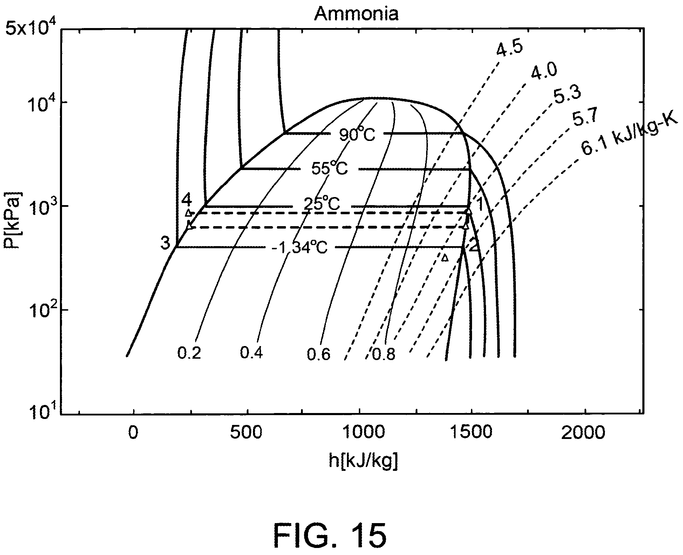

In contrast, Figure 15 shows the P-h diagram of an LTLEC cycle, such as those used in OTEC operations. Typical thermal efficiency for an LTLEC cycle is 2 to 10%. This is almost one-third to one-tenth that of a conventional high temperature steam power cycle. Hence, an LTLEC cycle needs much larger size heat exchangers than conventional power cycles.

The heat exchange plates described below provide high heat transfer performance and also low pressure drop in heat source and heat sink fluid sides to limit the pumping power requirements which affect the system efficiency. These heat exchange plates, designed for OTEC and other LTLEC cycles, can include the following features:
1) A working fluid flow path having a mini-channel design. This can be provided in a roll-bonded aluminum heat exchange plate and provides a large active heat transfer area between the working and non-working fluids;
2) A gap provided between plates and/or offsetting the roll-bond plates between even number and odd number plates so as to significantly reduce the pressure drop in heat source and heat sink non-working fluids. In this way, a relatively wide fluid flow area for heat source and heat sink fluid sides can be provided, while maintaining a relatively narrow fluid flow area for the working fluid of the power cycle;
3) A configuration of progressively changing channel numbers per pass within the flow passages of the working fluid can reduce the pressure drop of the phase-changing working fluid along the flow. The number of channels in the plate can be designed according to the working fluid, operating conditions, and heat exchanger geometry.
4) A wavy working fluid flow passages or channel configuration can enhance the heat transfer performance.
5) Within the working fluid flow channels and among parallel channels, both ends of channel's inner walls of the flow channel can be curved to smoothly direct the fluid to subsequent channels when the flow direction is reversed, and non-uniform distances from the ends of channel's inner walls to the side wall can be used among parallel channels.

The above features can reduce the pumping power needed in the system, and enhance the heat transfer performance.

Referring again to Fig. 11, mini-channel roll-bonded heat exchange plates 1051 and 1052 are shown in perspective view. A cross-counter flow between the working fluid and the non-working fluid is provided. When used as an evaporator, the non-working fluid 1057 (e.g., seawater) enters the top of the plates and leaves from the bottom of the plates. The working fluid 1058 (e.g., ammonia) enters the bottom side of the plates in liquid state, and evaporates and finally becomes vapor phase by absorbing thermal energy from the higher temperature non-working fluid. The generated vapor 1059 leaves the plates from the top side.

Fig. 13 shows fluid flows in a side view. The working fluid flow channels 1055 have relatively wide width w and relatively low height h in order to increase the active heat transfer area between the two fluids while reducing the volume of the entire heat exchange plate. The width w of the channels can range between about 10 and about 15 mm (e.g., more than 11 mm, more than 12 mm, more than 13 mm, less than 14 mm, less than 13 mm, and/or less than 12 mm). The height h of the channels can range between about 1 and about 3 mm (e.g., more than 1.25 mm, more than 1.5 mm, more than 1.75 mm, more than 2 mm, less than 2.75 mm, less than 2.5 mm, less than 2.25 mm and/or less than 2 mm). The spacing between channels can be between about 4 and about 8 mm (e.g., more than 4.5 mm, more than 5 mm, more than 5.5 mm, less than 7.5 mm, less than 7 mm, and/or less than 6.5 mm). The roll-bonded plates are arranged in an even plate 1051 and odd plate 1052 distribution with offset working fluid flow passages 1055 in order to provide a smooth flow path for the non-working fluid 1057 and provide a wider non-working fluid flow area than the working fluid flow area in working fluid flow channels 1055. This arrangement reduces the pressure drop in the heat source and heat sink fluid sides.

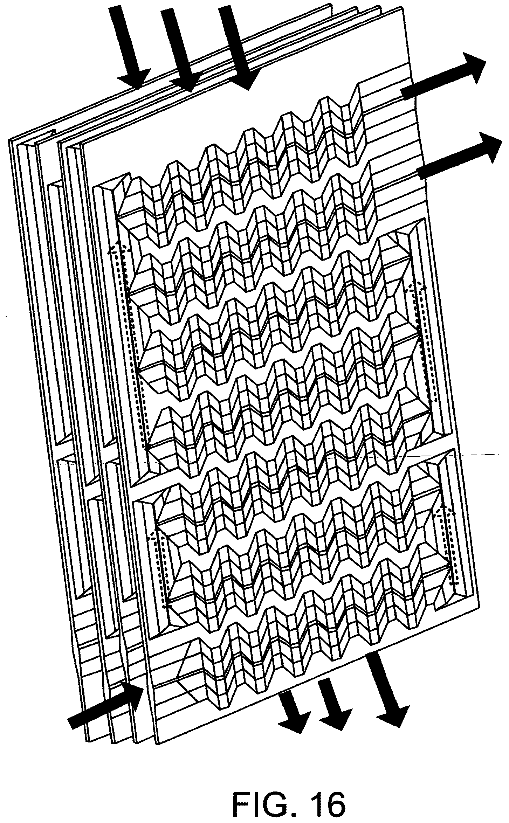

Fig. 16 illustrates an undulating or wavy working fluid flow path designed to enhance the heat transfer performance of the plate.

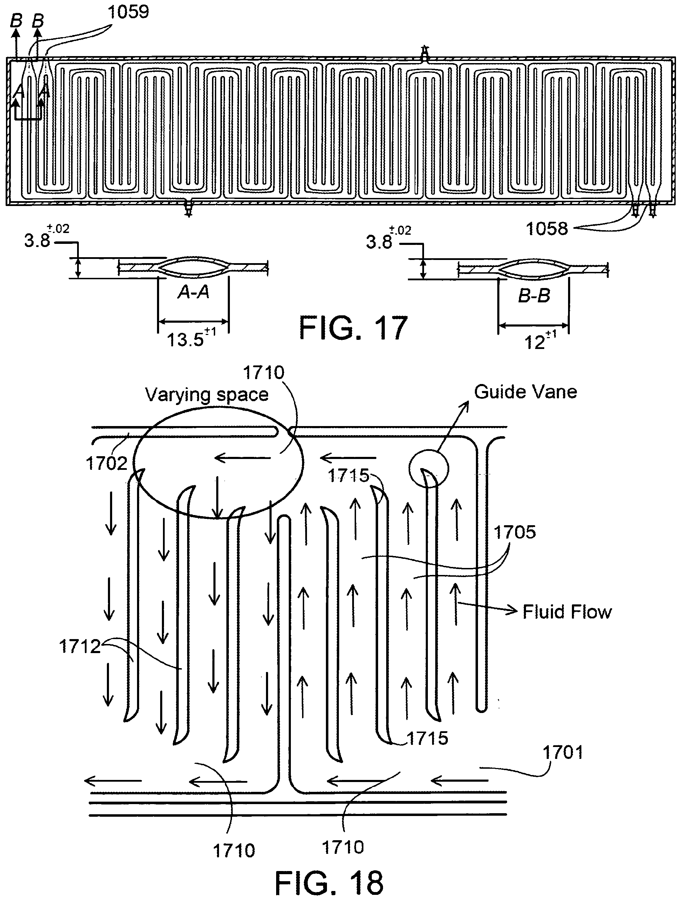

Figure 17 illustrates an embodiment of a heat exchange plate with two inlets receiving working fluid 1058 and two outlets discharging heated or cooled fluid 1059. The internal flow paths within each open-flow plate are arranged in an alternating serpentine pattern so that the flow of the working fluid is substantially perpendicular or cross-flow to the flow direction of the non-working fluid. In addition, the progression of the working fluid through the serpentine patter can be generally parallel to the flow of the non-working fluid or opposite the direction of flow of the non-working fluid. In some embodiments, flow distribution between channels can be improved by the use of guide vanes. Figure 18 illustrates an embodiment of a heat exchange plate in which an area 1710 of varying space in the flow path 1701 is provided to even the flow distribution among parallel channels 1705. Furthermore, both ends 1715 of the channel's inner walls 1712 are curved to smoothly direct the fluid to subsequent channels when the flow direction is reversed, and non-uniform distances from the ends of channel's inner walls 1712 to the side wall 1702 can be used among parallel channels. These guide vanes and varying flow path dimensions can be implemented in heat exchange plates such as, for example, the heat exchange plates shown in Figures 17, 19A and B, and 20A and B.

In some embodiments, it has been found that the working fluid changes its phase from liquid to vapor along the flow path, and consequently the working fluid pressure drop will increase significantly if the same flow passage area is used throughout the entire heat exchange plate like. In order to reduce the fluid-pressure drop increase along the flow associated with its vapor quality change, the number of parallel flow passages per pass can be increased along the flow path of the working fluid.

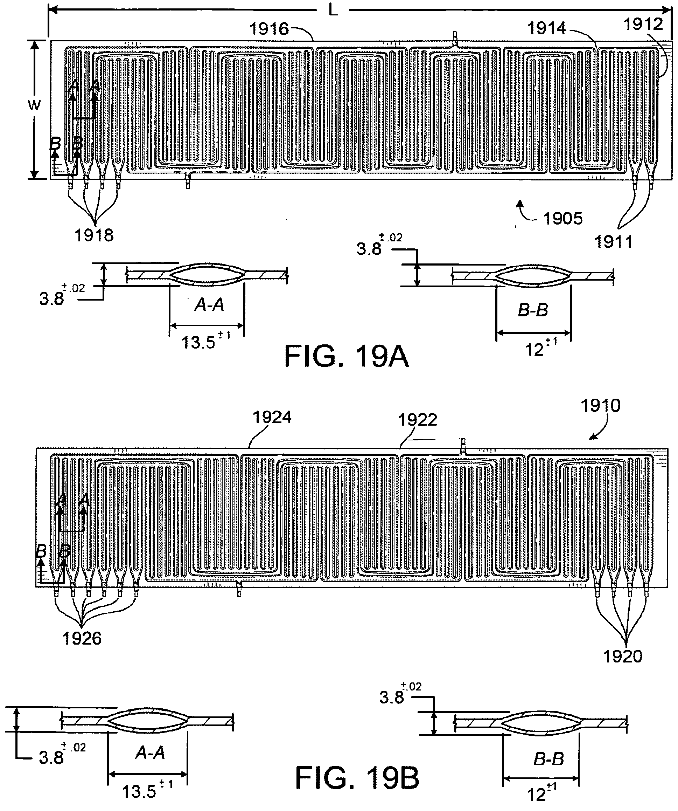

Figures 19A and 19B illustrate a pair of heat exchange plates 1905, 1910 implementing this approach in an evaporator. The heat exchange plate 1905 in Figure 19A has two inlets 1911 which each feed into two mini-channels 1912. The mini-channels 1912 extend along the plate in a serpentine fashion that is similar to the channels of the heat exchange plate shown in Figure 17. However, in the heat exchange plate shown in Figure 19A, the flow from two mini-channels feeds into three mini-channels at a first transition point 1914. The flow from the three mini-channels feeds into four mini-channels at a second transition point 1916. As the heat exchange plate includes two separate, complementary flow paths, these expansions result in eight mini-channels which discharge through four outlets 1918.

The four outlets 1918 of the heat exchange plate 1905 are hydraulically connected to the four inlets 1920 of heat exchange plate 1910 shown in Figure 19B. The flow from four mini-channels feeds into five mini-channels at a third transition point 1922. The flow from the five mini-channels feeds into six mini-channels at a fourth transition point 1924. As this heat exchange plate also includes two separate, complementary flow paths, these expansions result in twelve mini-channels which discharge through six outlets 1926. Connecting the heat exchange plates 1905, 1910 in series provides the equivalent of a single long heat exchange plate but is easier to manufacture.

The plates 1905, 1910 have a length L of between about 1200 mm and 1800 mm (e.g., more than 1300 mm, more than 1400 mm, more than 1450 mm, more than 1475 mm, less than 1700 mm, less than 1600 mm, less than about 1550 mm and/or less than 1525 mm). The width W of the plates can range between about 250 and about 450 mm (e.g., more than 275 mm, more than 300 mm, more than 325 mm, more than 350 mm, less than 425 mm, less than 400 mm, less than 375 mm and/or less than 350 mm).

In some embodiments, different size plates and different numbers of inlets and outlets are used to provide the desired heat exchange area and expansion/contraction characteristics. For example, the paired plates 1905, 1910 are sized in part based on the limitations of the current vendor. In some embodiments, a single plate will replace the paired plates 1905, 1010 thus removing the need for the outlets 1920 and inlets 1918 that are used to transfer working fluid from plate 1905 to plate 1910. The larger plates can have a length L of between about 2700 mm and 3300 mm (e.g., more than 2800 mm, more than 2900 mm, more than 2950 mm, more than 2975 mm, less than 3200 mm, less than 3100 mm, less than about 3050 mm and/or less than 3025 mm). The larger plates can have a width W between about 550 and about 850 mm (e.g., more than 575 mm, more than 600 mm, more than 625 mm, more than 650 mm, less than 825 mm, less than 800 mm, less than 775 mm and/or less than 750 mm). In some embodiments, a single larger inlet 1918 replaces the 2 inlets of plate 1905 and feeds working fluid to all four mini-channels 1912. Because the inlets 1918 and outlets 1920 can be sources of head losses that decrease the efficiency of the heat exchange plates, reducing the number of inlets 1918 and outlets 1920 will reduce the overall pumping requirement and, thus parasitic load, of a given OTEC system.

The flow through heat exchange plates 1905, 1910 is described for an evaporator. The heat exchange plates 1905, 1910 could also be used in a condenser. However, the flow of fluid through a condenser would be the reverse of the flow described for the evaporator.

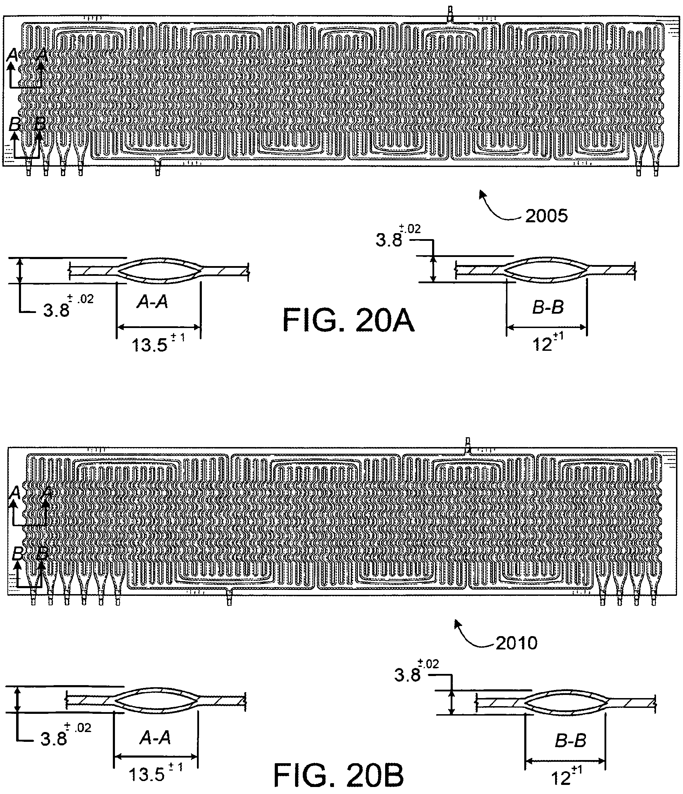

Some heat exchange plates include meandering mini-channels which can increase residence time for the working fluid (e.g., ammonia) passing through the heat exchange plates as well as providing additional surface area for heat transfer. Figures 20A and 20B illustrate a pair of heat exchange plates 2005, 2010 that is generally similar to the heat exchange plates 1905, 1910 shown in Figures 19A and 19B. However, the mini-channels of heat exchange plates 2005, 2010 include a meandering pattern. Based on laboratory testing and numerical modeling, the heat exchange plates 2005, 2010 including a sinusoidal meandering pattern are estimated to provide the same heat exchange as plates 1905, 1910 with an approximately 10% reduction in the number of plates.

Both plates 1905, 1910 and plates 2005, 2010 include channels arranged in relatively sinusoidal curve patterns. These patterns appear to provide several advantages. The relatively sinusoidal curve patterns cause the water flow over the plates to take a more turbulent and longer path between the plates enabling the working fluid (e.g., ammonia) side to theoretically extract more thermal energy from the water. Moreover, the sinusoidal flow patterns are configured such that the plates can be turned in opposite directions or staggered (e.g., alternating left and right) so that the inlet and outlet fittings do not interfere with each other.

Heat exchange plates incorporating the various features discussed above can be manufactured using a roll-bonded process. Roll bonding is a manufacturing process by which two metal plates are fused together by heat and pressure then expanded with high pressure air so that flow channels are created between the two panels. A carbon-based material is printed on the bottom panel in the desired flow pattern. A second panel is then laid atop the first panel and the two panels are then rolled through a hot rolling press where the two panels are fused everywhere except where the carbon material is present. At least one channel is printed to the edge where a vibrating mandrel is inserted between the two plates creating a port into which pressurized air is injected. The pressurized air causes the metal to deform and expand so that channels are created where the two plates are prevented from fusing together. There are two ways that roll bonding can be done: continuous, wherein the metal is run continuously through hot roll presses off rolls of sheet metal; or discontinuous wherein precut panels are individually processed.

In a prototype, two metal sheets, each approximately 1.05-1.2 mm thick, 1545 mm long, and 350 mm wide, were roll-bonded together to form plates. Channels, in the patterns shown in Figures 19A and 19B, were formed between the joined metal sheets by blow-molding. The channels were formed with a width w of between 12-13.5 mm and a height h of about 2 mm. The plates exhibit good heat exchange properties using ammonia as the working fluid and water as the non-working fluid.

### Additional OTEC Features:

In an exemplary implementation of an OTEC power plant, an offshore OTEC spar platform includes four separate power modules, each generating about 25 MWe Net at the rated design condition. Each power module comprises four separate power cycles or cascading thermodynamic stages that operate at different pressure and temperature levels and pick up heat from the seawater system in four different stages. The four different stages operate in series. The approximate pressure and temperature levels of the four stages at the rated design conditions (Full Load - Summer Conditions) are:

| | **Turbine inlet Pressure**/**Temp**. (**Psia**) / **(° F)** | **Condenser Pressure/Temp. (Psia) / (° F)** |
|---|---|---|
| 1^{st} Stage | 137.9 / 74.7 | 100.2 / 56.5 |
| 2^{nd} Stage | 132.5 / 72.4 | 93.7 / 53 |
| 3^{rd} Stage | 127.3 / 70.2 | 87.6 / 49.5 |
| 4^{th} Stage | 122.4 / 68 | 81.9 / 46 |
| | | |

| | **(MPascal) / (° C)** | **(MPascal) / (° C)** |
|---|---|---|
| 1^{st} Stage | 0.9508/23.7 | 0.6895 / 13.6 |
| 2^{nd} Stage | 0.9136/22.4 | 0.6460 / 11.7 |
| 3^{rd} Stage | 0.8777 / 21.2 | 0.6040 / 49.7 |
| 4^{th} Stage | 0.8439/20 | 0.5647 / 7.8 |

The working fluid is boiled in multiple evaporators by picking up heat from warm seawater (WSW). Saturated vapor is separated in a vapor separator and led to an ammonia turbine by STD schedule, seamless carbon steel pipe. The liquid condensed in the condenser is pumped back to the evaporator by 2x100% electric motor driven constant speed feed pumps. The turbines of cycle-1 and 4 drive a common electric generator. Similarly the turbines of cycle-2 and 3 drive another common generator. In some embodiments, there are two generators in each plant module and a total of 8 in the 100MWe plant. The feed to the evaporators is controlled by feed control valves to maintain the level in the vapor separator. The condenser level is controlled by cycle fluid make up control valves. The feed pump minimum flow is maintained by recirculation lines led to the condenser through control valves regulated by the flow meter on the feed line.

In operation, the four (4) power cycles of the modules operate independently. Any of the cycles can be shut down without hampering operation of the other cycles if needed, for example in case of a fault or for maintenance. Such partial shut downs will reduce the net power generation of the overall power module.

The system requires large volumes of seawater and includes separate systems for handling cold and warm seawater, each with its pumping equipment, water ducts, piping, valves, heat exchangers, etc. Seawater is more corrosive than fresh water and all materials that may come in contact with it need to be selected carefully considering this. The materials of construction for the major components of the seawater systems will be:

| | |
|---|---|
| Large bore piping: | Fiberglass Reinforced Plastic (FRP) |
| Large seawater ducts & chambers: | Epoxy-coated carbon steel |
| Large bore valves: | Rubber lined butterfly type |
| Pump impellers: | Suitable bronze alloy |

Unless controlled by suitable means, biological growths inside the seawater systems can cause significant loss of plant performance and can cause fouling of the heat transfer surfaces leading to lower outputs from the plant. This internal growth can also increase resistance to water flows causing greater pumping power requirements, lower system flows, etc. and even complete blockages of flow paths in more severe cases.

The Cold Seawater ("CSW") system using water drawn in from the deep ocean should have very little or no bio-fouling problems. Water in those depths does not receive much sunlight and lacks oxygen, and so there are fewer living organisms in it. Some types of anaerobic bacteria may, however, be able to grow in it under some conditions. Shock chlorination will be used to combat bio-fouling.

The Warm Seawater ("WSW") system handling warm seawater from near the surface will have to be protected from bio-fouling. It has been found that fouling rates are much lower in tropical open ocean waters suitable for OTEC operations than in coastal waters. When necessary, chemical agents can be used to control bio-fouling in OTEC systems at very low doses that will be environmentally acceptable. Dosing of small amounts of chlorine has proved to be very effective in combating bio-fouling in seawater. Dosages of chlorine at the rate of about 70 ppb for one hour per day, is quite effective in preventing growth of marine organisms. This dosage rate is only 1/20th of the environmentally safe level stipulated by EPA. Other types of treatment (thermal shock, shock chlorination, other biocides, etc.) can be used from time to time in-between the regimes of the low dosage treatment to get rid of chlorine-resistant organisms.

Necessary chlorine for dosing the seawater streams is generated on-board the plant ship by electrolysis of seawater. Electro-chlorination plants of this type are available commercially and have been used successfully to produce hypochlorite solution to be used for dosing. The electro-chlorination plant can operate continuously to fill-up storage tanks and contents of these tanks are used for the periodic dosing described above.

The seawater conduits are designed to avoid any dead pockets where sediments can deposit or organisms can settle to start a colony. Sluicing arrangements are provided from the low points of the water ducts to blow out deposits that may get collected there. High points of the ducts and water chambers are vented to allow trapped gases to escape.

The Cold Seawater (CSW) system will consist of a common deep water intake for the plant ship, and water pumping/distribution systems, the condensers with their associated water piping, and discharge ducts for returning the water back to the sea. The cold water intake pipe extends down to a depth of more than 883 m (2700 ft), (e.g., between 883 m and 1280 m (2700 ft to 4200 ft)), where the seawater temperature is approximately a constant 40° F. The entrance to the pipe is protected by screens to stop large organisms from being sucked in to it. After entering the pipe, cold water flows up towards the sea surface and is delivered to a cold well chamber near the bottom of the vessel or spar.

The CSW supply pumps, distribution ducts, condensers, etc. are located on the lowest level of the plant. The pumps take suction from the cross duct and send the cold water to the distribution duct system. 4 x 25% CSW supply pumps are provided for each module. Each pump is independently circuited with inlet valves so that they can be isolated and opened up for inspection, maintenance, etc. when required. The pumps are driven by high-efficiency electric motors.

The cold seawater flows through the condensers of the cycles in series and then the CSW effluent is discharged back to the sea. CSW flows through the condenser heat exchangers of the four plant cycles in series in the required order. The condenser installations is arranged to allow them to be isolated and opened up for cleaning and maintenance when needed.

The WSW system comprises underwater intake grills located below the sea surface, an intake plenum for conveying the incoming water to the pumps, water pumps, biocide dosing system to control fouling of the heat transfer surfaces, water straining system to prevent blockages by suspended materials, the evaporators with their associated water piping, and discharge ducts for returning the water back to the sea.

Intake grills are provided in the outside wall of the plant modules to draw in warm water from near the sea surface. Face velocity at the intake grills is kept to less than 0.5 ft/sec. to limit entrainment of marine organisms. These grills also prevent entry of large floating debris and their clear openings are based on the maximum size of solids that can pass through the pumps and heat exchangers safely. After passing through these grills, water enters the intake plenum located behind the grills and is routed to the suctions of the WSW supply pumps.

The WSW pumps are located in two groups on opposite sides of the pump floor. Half of the pumps are located on each side with separate suction connections from the intake plenum for each group. This arrangement limits the maximum flow rate through any portion of the intake plenum to about 1/16th of the total flow and so reduces the friction losses in the intake system. Each of the pumps is provided with valves on inlet sides so that they can be isolated and opened up for inspection, maintenance, etc. when required. The pumps are driven by high-efficiency electric motors with variable frequency drives to match pump output to load.

It is necessary to control bio-fouling of the WSW system and particularly its heat transfer surfaces, and suitable biocides will be dosed at the suction of the pumps for this.

The warm water stream may need to be strained to remove the larger suspended particles that can block the narrow passages in the heat exchangers. Large automatic filters or 'Debris Filters' can be used for this if required. Suspended materials can be retained on screens and then removed by backwashing. The backwashing effluents carrying the suspended solids will be routed to the discharge stream of the plant to be returned to the ocean. The exact requirements for this will be decided during further development of the design after collection of more data regarding the seawater quality.

The strained warm seawater (WSW) is distributed to the evaporator heat exchangers. WSW flows through the evaporators of the four plant cycles in series in the required order. WSW effluent from the last cycle is discharged at a depth of approximately 175 feet or more below the sea surface. It then sinks slowly to a depth where temperature (and therefore density) of the seawater will match that of the effluent.

### Additional Aspects:

The baseline cold water intake pipe is a staved, segmented, pultruded fiberglass pipe. Each stave segment can be 40 - 50' long. Stave segments can be joined by staggering staves to create an interlocking seam. Pipe staves can be extruded in panels up to 52-inches wide and at least 50-feet in length and can incorporate e-glass or s-glass with polyurethane, polyester, or vinylester resin. In some aspects, the stave segments can be concrete. Staves can be solid construction. The staves can be a cored or honeycombed construction. The staves will be designed to interlock with each other and at the ends of the staves will be staggered there by eliminating the use of flanges between sections of the cold water pipe. In some embodiments, the staves can be 40-ft long and staggered by 5-ft and 10-ft where the pipe sections are joined. The staves and pipe sections can be bonded together, e.g., using polyurethane or polyester adhesive. 3-M and other companies make suitable adhesives. If sandwich construction is used, polycarbonate foam or syntactic foam can be used as the core material. Spider cracking is to be avoided and the use of polyurethane helps to provide a reliable design.

In some embodiments, the envisioned CWP is continuous, i.e. it does not have flanges between sections.

The CWP can be connected to the spar via a spherical bearing joint. The cold water pipe can also be connected to the spar using a combination of lifting cables and a ram or dead-bolt system.

One of the significant advantages of using the spar as the platform is that doing so results in relatively small rotations between the spar itself and the CWP even in the most severe 100-year storm conditions. In addition, the vertical and lateral forces between the spar and the CWP are such that the downward force between the spherical ball and its seat keeps the bearing surfaces in contact at all times. This bearing, which also acts as the water seal, does not come out of contact with its mating spherical seat. Thus, there is no need to install a mechanism to hold the CWP in place vertically. This helps to simplify the spherical bearing design and also limits the pressure losses that would otherwise be caused by any additional CWP pipe restraining structures or hardware. The lateral forces transferred through the spherical bearing are also low enough that they can be adequately accommodated without the need for vertical restraint of the CWP.

Though embodiments herein have described multi-stage heat exchanger in a floating offshore vessel or platform, it will be appreciated that other embodiments are within the scope of the invention. For example, the multi-stage heat exchanger and integrated flow passages can be incorporated into shore based facilities including shore based OTEC facilities. Moreover, the warm water can be warm fresh water, geo-thermally heated water, or industrial discharge water (e.g., discharged cooling water from a nuclear power plant or other industrial plant). The cold water can be cold fresh water. The OTEC system and components described herein can be used for electrical energy production or in other fields of use including: salt water desalination: water purification; deep water reclamation; aquaculture; the production of biomass or biofuels; and still other industries.
Other embodiments are within the scope of the following claims.

## Claims

1. A multi-stage heat exchange system, **characterized in that** the multi-stage heat exchange system comprises:
a first stage heat exchange rack comprising one or more open-flow plates (1022, 1051, 1052, 1905, 1910, 2005, 2010) in fluid communication with a first working fluid (1058) flowing through an internal passage in each of the one or more open-flow plates;
a second stage heat exchange rack vertically aligned with the first heat exchange rack, the second stage heat exchange rack comprising one or more open-flow plates (1022, 1051, 1052, 1905, 1910, 2005, 2010) in fluid communication with a second working fluid flowing through an internal passage in each of the one or more open-flow plates;
wherein a non-working fluid flows first through the first stage heat exchange rack and around each of the one or more open-flow plates therein for thermal exchange with the first working fluid and secondly through the second heat exchange rack and around each of the open-flow plates for thermal exchange with the second working fluid.

2. The heat exchange system of claim 1 wherein the first working fluid is heated to a vapor and the second working fluid is heated to a vapor having a temperature lower than the vaporous first working fluid, particularly wherein the first working fluid is heated to a temperature of between 20.6 and 21.7 degrees Celsius (69 and 71 degrees F), more particularly wherein the second stage working fluid is heated to a temperature below the temperature of the first stage working fluid and between 20 and 21.1 degrees Celsius (68 and 70 degrees F).

3. The heat exchange system of claim 1 wherein the first working fluid is cooled to a condensed liquid in the first stage heat exchange rack and the second working fluid is cooled to a condensed liquid in the second stage heat exchange rack, the condensed second stage working fluid having a higher temperature than the condensed first stage working fluid, particularly wherein the first working fluid is cooled to a temperature of between 5.6 and 7.8 degrees Celsius (42 and 46 degrees F), more particularly wherein the second stage working fluid is cooled to a temperature greater than the first stage working fluid and between to a temperature of between 7.2 and 8.3 degrees Celsius (45 and 47 degrees F).

4. The heat exchange system of claim 2 wherein the non-working fluid enters the first stage heat exchange rack at a first temperature and the non-working fluid enters the second stage heat exchange rack at a second lower temperature or
wherein the non-working fluid enters the first stage heat exchange rack at a temperature of between 3.3 and 6.7 degrees Celsius (38 and 44 degrees F) and leaves the second stage heat exchange rack at a temperature of between 5.6 and 8.9 degrees Celsius (42 and 48 degrees F).

5. The heat exchange system of claim 1 wherein the flow ratio of the non-working fluid to the working fluid is greater than 2:1, particularly wherein the flow ratio of the non-working fluid to the working fluid is between 20:1 and 100:1.

6. The heat exchange system of claim 1 wherein the first and second stage heat exchange racks form first and second stage cabinets (521, 522, 523, 524) and wherein the non-working fluid flows from the first cabinet to the second cabinet without pressure losses due to piping.

7. The heat exchange system of claim 1 wherein the open-flow plates reduce pressure losses in the flow of the working fluid due to the absence of nozzles and/or non-working fluid penetrations through the plate.

8. The heat exchange system of claim 1 wherein the flow path of the working fluids comprises a first flow direction across the flow path of the non-working fluid and a second flow path direction opposite the first flow path direction.

9. The heat exchange system of claim 1 wherein the first and second working fluids are working fluids in an OTEC system (310), particularly wherein the first and second working fluids are ammonia.

10. The heat exchange system of claim 1 wherein the non-working fluid is raw water.

11. The heat exchange system of claim 1 wherein the open-flow plates further comprise front, back, top and bottom external surfaces and the non-working fluid is in contact with all external surfaces.

12. The heat exchange system of claim 1 wherein:
the first stage rack further comprises a plurality of open-flow plates in horizontal alignment having a gap (1053) between each plate within the first stage rack;
the second stage rack further comprises a plurality of open-flow plates in horizontal alignment having a gap (1053) between each plate within the second stage racks; and
the plurality of open-flow plates and gaps therebetween in the second stage rack are vertically aligned with the plurality of open-flow plates and gaps therebetween in the first stage rack to reduce pressure losses in the flow of the non-working fluid through the first and second stage racks, particularly further comprising a rail for suspending each of the plurality of open-flow plates and a plurality of slots for maintaining the horizontal position of each of the plurality of open-flow plates.

13. A multi-stage heat exchange system of claim 1 comprising:
a third stage heat exchange rack vertically aligned with the second stage heat exchange rack, the third stage heat exchange rack comprising one or more open-flow plates comprising an external surface surrounded by the non-working fluid and an internal passage in fluid communication with a third working fluid flowing through the internal passage;
a fourth stage heat exchange rack vertically aligned with the third stage heat exchange rack, the fourth stage heat exchange rack comprising one or more open-flow plates comprising an exterior surface surrounded by the non-working fluid and an internal passage in fluid communication with a fourth working fluid flowing through the internal passage;
the non-working fluid flows through the second stage heat exchange rack for thermal interaction with the second working fluid before flowing through the third stage heat exchange rack for thermal interaction with the third working fluid, and
the non-working fluid flows through the third stage heat exchange rack for thermal interaction with the third working fluid before flowing through the fourth stage heat exchange rack for thermal interaction with the fourth working fluid.

14. The heat exchange system of claim 13 wherein: the first working fluid is heated to a vapor;
the second working fluid is heated to a vapor having a temperature lower than the vaporous first working fluid;
the third working fluid is heated to a vapor having a temperature lower than the second working fluid; and the fourth working fluid is heated to a vapor having a temperature lower than the third vapor fluid, particularly wherein: the first working fluid is heated to temperature of between 20.6 and 21.7 degrees Celsius (69 and 71 degrees F);
the second working fluid is heated to a temperature lower than the first working fluid and between 20 and 21.1 degrees Celsius (68 and 70 degrees F); the third working fluid is heated to a temperature below the second working fluid and between 18.9 and 20.6 degrees Celsius (66 and 69 degrees F); and
the fourth working fluid is heated to a temperature below the third working fluid and between 17.8 and 19.4 degrees Celsius (64 and 67 degrees F).

15. The heat exchange system of claim 13 wherein: the first working fluid is cooled to a condensed liquid in the first stage heat exchange rack;
the second working fluid is cooled to a condensed liquid in the second stage heat exchange rack and has a temperature higher than the condensed first working fluid;
the third working fluid is cooled to a condensed liquid in the third heat exchange rack and has a temperature higher than the condensed second working fluid; and
the fourth working fluid is condensed to a liquid in the fourth heat exchange rack and has a temperature higher than the condensed third working fluid, particularly wherein: the first working fluid is condensed to temperature of between 5.6 and 7.8 degrees Celsius (42 and 46 degrees F);
the second working fluid is condensed to a temperature higher than the first working fluid and between 7.2 and 8.3 degrees Celsius (45 and 47 degrees F);
the third working fluid is condensed to a temperature higher than the second working fluid and between 7.8 and 9.4 degrees Celsius (46 and 49 degrees F); and
the fourth working fluid is condensed to a temperature higher the third working fluid and between 9.4 and 11.1 degrees Celsius (49 and 52 degrees F).

16. The heat exchange system of claim 13 wherein the non-working fluid flows from the first stage heat exchange rack to the second stage heat exchange rack, from the second stage heat exchange rack to the third stage heat exchange rack, and from the third stage heat exchange rack to the fourth stage heat exchange rack without pressure losses due to piping.

17. The heat exchange system of claim 13 wherein:
the first stage rack further comprises a plurality of open-flow plates in horizontal alignment having a gap between each plate within the first stage rack;
the second stage rack further comprises a plurality of open-flow plates in horizontal alignment having a gap between each plate within the second stage racks;
the third stage rack further comprises a plurality of open flow plates in horizontal alignment having a gap between each plate within the third stage rack;
the fourth stage rack further comprises a plurality of open flow plates in horizontal alignment having a gap between each plate within the fourth stage rack; and
the plurality of open-flow plates and gaps within each rack are vertically aligned with the open-flow plates and gaps in each of the other racks of the other stages so as to reduce pressure losses in the flow of the non-working fluid through the first and second stage racks.

## Patentansprüche

1. Mehrstufiges Wärmeaustauschsystem, **dadurch gekennzeichnet, dass** das mehrstufige Wärmeaustauschsystem umfasst:
einen Wärmeaustauschrahmen der ersten Stufe, umfassend eine oder mehrere strömungsoffene Platten (1022, 1051, 1052, 1905, 1910, 2005, 2010) in Fluidverbindung mit einem ersten Arbeitsfluid (1058), das durch einen internen Durchgang in jeder der einen oder mehreren strömungsoffenen Platten strömt;
einen Wärmeaustauschrahmen der zweiten Stufe, der vertikal mit dem ersten Wärmeaustauschrahmen ausgerichtet ist, wobei der Wärmeaustauschrahmen der zweiten Stufe eine oder mehrere strömungsoffene Platten (1022, 1051, 1052, 1905, 1910, 2005, 2010) in Fluidverbindung mit einem zweiten Arbeitsfluid umfasst, das durch einen internen Durchgang in jeder der einen oder mehreren strömungs offenen Platten strömt;
wobei ein Nicht-Arbeitsfluid zuerst durch den Wärmeaustauschrahmen der ersten Stufe und um jede der einen oder mehreren strömungsoffenen Platten darin zum Wärmeaustausch mit dem ersten Arbeitsfluid strömt, und zweitens durch den zweiten Wärmeaustauschrahmen und um jede der strömungsoffenen Platten zum Wärmeaustausch mit dem zweiten Arbeitsfluid strömt.

2. Wärmeaustauschsystem nach Anspruch 1, wobei das erste Arbeitsfluid zu einem Dampf erhitzt wird, und das zweite Arbeitsfluid zu einem Dampf erhitzt wird, der eine Temperatur aufweist, die geringer als die des dampfförmigen ersten Arbeitsfluids ist, wobei insbesondere das erste Arbeitsfluid auf eine Temperatur zwischen 20,6 und 21,7 Grad Celsius (69 und 71 Grad F) erhitzt wird, wobei insbesondere das Arbeitsfluid der zweiten Stufe auf eine Temperatur unterhalb einer Temperatur des Arbeitsfluids der ersten Stufe und auf zwischen 20 und 21,1 Grad Celsius (68 und 70 Grad F) erhitzt wird.

3. Wärmeaustauschsystem nach Anspruch 1, wobei das erste Arbeitsfluid in dem Wärmeaustauschrahmen der ersten Stufe zu einer kondensierten Flüssigkeit gekühlt wird, und das zweite Arbeitsfluid in dem Wärmeaustauschrahmen der zweiten Stufe zu einer kondensierten Flüssigkeit gekühlt wird, wobei das kondensierte Arbeitsfluid der zweiten Stufe eine höhere Temperatur als das kondensierte Arbeitsfluids der ersten Stufe aufweist, wobei das erste Arbeitsfluid auf eine Temperatur zwischen 5,6 und 7,8 Grad Celsius (42 und 46 Grad F) gekühlt wird, wobei insbesondere das Arbeitsfluid der zweiten Stufe zu einer Temperatur oberhalb der des Arbeitsfluids der ersten Stufe und zwischen 7,2 und 8,3 Grad Celsius (45 und 47 Grad F) gekühlt wird.

4. Wärmeaustauschsystem nach Anspruch 2, wobei das Nicht-Arbeitsfluid in den Wärmeaustauschrahmen der ersten Stufe bei einer ersten Temperatur eintritt und das Nicht-Arbeitsfluid in den Wärmeaustauschrahmen der zweiten Stufe bei einer zweiten geringeren Temperatur eintritt oder wobei das Nicht-Arbeitsfluid in den Wärmeaustauschrahmen der ersten Stufe bei einer Temperatur zwischen 3,3 und 6,7 Grad Celsius (38 und 44 Grad F) eintritt und den zweiten Wärmeaustauschrahmen bei einer Temperatur zwischen 5,6 und 8,9 Grad Celsius (42 und 48 Grad F) verlässt.

5. Wärmeaustauschsystem nach Anspruch 1, wobei das Strömungsverhältnis von Nicht-Arbeitsfluid zu Arbeitsfluid größer ist als 2:1, wobei insbesondere das Strömungsverhältnis von Nicht-Arbeitsfluid zu Arbeitsfluid zwischen 20:1 und 100:1 beträgt.

6. Wärmeaustauschsystem nach Anspruch 1, wobei der Wärmeaustauschrahmen der ersten und der zweiten Stufe Gehäuse der ersten und zweiten Stufe (521, 522, 523, 524) bildet und wobei das Nicht-Arbeitsfluid ohne Druckverluste aufgrund der Leitungen aus dem ersten Gehäuse zum zweiten Gehäuse strömt.

7. Wärmeaustauschsystem nach Anspruch 1, wobei die strömungsoffenen Platten Druckverluste in der Strömung des Arbeitsfluids aufgrund der Abwesenheit von Düsen und/oder Nicht-Arbeitsfluid-Penetrationen durch die Platte reduzieren.

8. Wärmeaustauschsystem nach Anspruch 1, worin der Strömungsweg der Arbeitsfluida eine erste Strömungsrichtung durch den Strömungsweg des Nicht-Arbeitsfluids und eine zweite Strömungswegrichtung, entgegengesetzt zu der ersten Strömungswegrichtung, umfasst.

9. Wärmeaustauschsystem nach Anspruch 1, wobei das erste und das zweite Arbeitsfluid Arbeitsfluida in einem OTEC-System (310) sind, insbesondere wobei das erste und das zweite Arbeitsfluid Ammoniak sind.

10. Wärmeaustauschsystem nach Anspruch 1, wobei das Nicht-Arbeitsfluid Rohwasser ist.

11. Wärmeaustauschsystem nach Anspruch 1, wobei die strömungsoffenen Platten des Weiteren vordere, hintere, obere und untere externe Oberflächen umfassen und das Nicht-Arbeitsfluid in Kontakt mit allen externen Oberflächen steht.

12. Wärmeaustauschsystem nach Anspruch 1, wobei:
der Rahmen der ersten Stufe ferner eine Vielzahl von strömungsoffenen Platten in horizontaler Ausrichtung mit einem Spalt (1053) zwischen jeder Platte innerhalb des Rahmens der ersten Stufe umfasst;
der Rahmen der zweiten Stufe ferner eine Vielzahl von strömungsoffenen Platten in horizontaler Ausrichtung mit einem Spalt (1053) zwischen jeder Platte innerhalb der Rahmen der zweiten Stufe umfasst; und
die Vielzahl von strömungsoffenen Platten und Spalte dazwischen in dem Rahmen der zweiten Stufe vertikal mit der Vielzahl von strömungsoffenen Platten und Spalte dazwischen in dem Rahmen der ersten Stufe ausgerichtet sind, um Druckverluste in der Strömung des Nicht-Arbeitsfluids durch die Rahmen der ersten und der zweiten Stufe zu reduzieren, insbesondere ferner umfassend eine Leiste zum Aufhängen jeder der Vielzahl von strömungsoffenen Platten und eine Vielzahl von Schlitzen zum Beibehalten der horizontalen Position jeder der Vielzahl von strömungsoffenen Platten.

13. Mehrstufiges Wärmeaustauschsystem nach Anspruch 1, umfassend:
einen Wärmeaustauschrahmen der dritten Stufe, der vertikal mit dem Wärmeaustauschrahmen der zweiten Stufe ausgerichtet ist, wobei der Wärmeaustauschrahmen der dritten Stufe eine oder mehrere strömungsoffene Platten umfasst, die eine externe Oberfläche umfassen, die von dem Nicht-Arbeitsfluid umgeben wird und einen internen Durchgang in Fluidverbindung mit einem dritten Arbeitsfluid, das durch den internen Durchgang strömt, umfasst;
einen Wärmeaustauschrahmen der vierten Stufe, der vertikal mit dem Wärmeaustauschrahmen der dritten Stufe ausgerichtet ist, wobei der Wärmeaustauschrahmen der vierten Stufe eine oder mehrere strömungsoffene Platten umfasst, die eine äußere Oberfläche umfassen, die von dem Nicht-Arbeitsfluid umgeben wird und einen internen Durchgang in Fluidverbindung mit einem vierten Arbeitsfluid, das durch den internen Durchgang strömt, umfasst;
wobei das Nicht-Arbeitsfluid durch den Wärmeaustauschrahmen der zweiten Stufe strömt, um in Wärmewechselwirkung mit dem zweiten Arbeitsfluid zu stehen, bevor es durch den Wärmeaustauschrahmen der dritten Stufe zur Wärmewechselwirkung mit dem dritten Arbeitsfluid strömt, und
wobei das Nicht-Arbeitsfluid durch den Wärmeaustauschrahmen der dritten Stufe strömt, um in Wärmewechselwirkung mit dem dritten Arbeitsfluid zu stehen, bevor es durch den Wärmeaustauschrahmen der vierten Stufe zur Wärmewechselwirkung mit dem vierten Arbeitsfluid strömt.

14. Wärmeaustauschsystem nach Anspruch 13, wobei: das erste Arbeitsfluid zu einem Dampf erhitzt wird;
das zweite Arbeitsfluid zu einem Dampf erhitzt wird, der eine Temperatur aufweist, die geringer als die des dampfförmigen ersten Arbeitsfluids ist;
das dritte Arbeitsfluid zu einem Dampf erhitzt wird, der eine Temperatur aufweist, die geringer als die des zweiten Arbeitsfluids ist; und das vierte Arbeitsfluid zu einem Dampf erhitzt wird, der eine Temperatur aufweist, die geringer als die des dritten Dampffluids ist, wobei insbesondere: das erste Arbeitsfluid auf eine Temperatur zwischen 20,6 und 21,7 Grad Celsius (69 und 71 Grad F) erhitzt wird;
das zweite Arbeitsfluid auf eine Temperatur erhitzt wird, die niedriger als die des ersten Arbeitsfluids ist und zwischen 20 und 21,1 Grad Celsius (68 und 70 Grad F) beträgt; das dritte Arbeitsfluid auf eine Temperatur erhitzt wird, die unterhalb der des ersten Arbeitsfluids liegt und zwischen 18,9 und 20,6 Grad Celsius (66 und 69 Grad F) beträgt; und
das vierte Arbeitsfluid auf eine Temperatur erhitzt wird, die unterhalb der des dritten Arbeitsfluids liegt und zwischen 17,8 und 19,4 Grad Celsius (64 und 67 Grad F) beträgt.

15. Wärmeaustauschsystem nach Anspruch 13, wobei: das erste Arbeitsfluid in dem Wärmeaustauschrahmen der ersten Stufe zu einer kondensierten Flüssigkeit gekühlt wird;
das zweite Arbeitsfluid in dem Wärmeaustauschrahmen der zweiten Stufe zu einer kondensierten Flüssigkeit gekühlt wird und eine Temperatur aufweist, die höher als die des ersten kondensierten Arbeitsfluids ist;
das dritte Arbeitsfluid in dem Wärmeaustauschrahmen der dritten Stufe zu einer kondensierten Flüssigkeit gekühlt wird und eine Temperatur aufweist, die höher als die des zweiten kondensierten Arbeitsfluids ist; und
das vierte Arbeitsfluid in dem Wärmeaustauschrahmen der vierten Stufe zu einer kondensierten Flüssigkeit gekühlt wird und eine Temperatur aufweist, die höher als die des dritten kondensierten Arbeitsfluids ist; wobei insbesondere: das erste Arbeitsfluid auf eine Temperatur zwischen 5,6 und 7,8 Grad Celsius (42 und 46 Grad F) kondensiert wird;
das zweite Arbeitsfluid auf eine Temperatur kondensiert wird, die höher als die des ersten Arbeitsfluids ist und zwischen 7,2 und 8,3 Grad Celsius (45 und 47 Grad F) beträgt;
das dritte Arbeitsfluid auf eine Temperatur kondensiert wird, die höher als die des zweiten Arbeitsfluids ist und zwischen 7,8 und 9,4 Grad Celsius (46 und 49 Grad F) beträgt; und
das vierte Arbeitsfluid auf eine Temperatur kondensiert wird, die höher als die des dritten Arbeitsfluids ist und zwischen 9,4 und 11,1 Grad Celsius (49 und 52 Grad F) beträgt.

16. Wärmeaustauschsystem nach Anspruch 13, wobei das Nicht-Arbeitsfluid von dem Wärmeaustauschrahmen der ersten Stufe zum Wärmeaustauschrahmen der zweiten Stufe, von dem Wärmeaustauschrahmen der zweiten Stufe zu dem Wärmeaustauschrahmen der dritten Stufe und von dem Wärmeaustauschrahmen der dritten Stufe zum Wärmeaustauschrahmen der vierten Stufe ohne Druckverluste aufgrund von Leitungen strömt.

17. Wärmeaustauschsystem nach Anspruch 13, wobei:
der Rahmen der ersten Stufe ferner eine Vielzahl von strömungsoffenen Platten in horizontaler Ausrichtung mit einem Spalt zwischen jeder Platte innerhalb des Rahmens der ersten Stufe umfasst;
der Rahmen der zweiten Stufe ferner eine Vielzahl von strömungsoffenen Platten in horizontaler Ausrichtung mit einem Spalt zwischen jeder Platte innerhalb der Rahmen der zweiten Stufe umfasst;
der Rahmen der dritten Stufe ferner eine Vielzahl von strömungsoffenen Platten in horizontaler Ausrichtung mit einem Spalt zwischen jeder Platte innerhalb des Rahmens der dritten Stufe umfasst;
der Rahmen der vierten Stufe ferner eine Vielzahl von strömungsoffenen Platten in horizontaler Ausrichtung mit einem Spalt zwischen jeder Platte innerhalb des Rahmens der vierten Stufe umfasst; und
die Vielzahl von strömungsoffenen Platten und Spalte innerhalb jedes Rahmens vertikal mit den strömungsoffenen Platten und Spalte in jedem der anderen Rahmen der anderen Stufen ausgerichtet ist, sodass Druckverluste in der Strömung des Nicht-Arbeitsfluids durch den Rahmen der ersten und zweiten Stufe reduziert werden.

## Revendications

1. Système d'échange de chaleur multi-étagé, **caractérisé en ce que** le système d'échange de chaleur multi-étagé comprend :
un montage d'échange de chaleur de premier étage comprenant une ou plusieurs plaques à écoulement ouvert (1022, 1051, 1052, 1905, 1910, 2005, 2010) en communication fluidique avec un premier fluide actif (1058) circulant à travers un passage interne dans la ou chacune des plaques à écoulement ouvert ;
un montage d'échange de chaleur de deuxième étage aligné verticalement avec le premier montage d'échange de chaleur, le montage d'échange de chaleur du deuxième étage comprenant une ou plusieurs plaques à écoulement ouvert (1022, 1051, 1052, 1905, 1910, 2005, 2010) en communication fluidique avec un deuxième fluide actif circulant à travers un passage interne dans la ou chacune des plaques à écoulement ouvert ;
dans lequel un fluide non actif circule d'abord à travers le montage d'échange de chaleur du premier étage et autour de la ou chacune des plaques à écoulement ouvert à l'intérieur pour un échange thermique avec le premier fluide actif et ensuite à travers le deuxième montage d'échange de chaleur et autour de chacune des plaques à écoulement ouvert pour un échange thermique avec le deuxième fluide actif.

2. Système d'échange de chaleur de la revendication 1 dans lequel le premier fluide actif est chauffé jusqu'à l'état d'une vapeur et le deuxième fluide actif est chauffé jusqu'à l'état d'une vapeur ayant une température inférieure à celle du premier fluide actif à l'état de vapeur, en particulier dans lequel le premier fluide actif est chauffé jusqu'à une température comprise entre 20,6 et 21,7 degrés Celsius (69 et 71 degrés F), plus particulièrement dans lequel le fluide actif du deuxième étage est chauffé jusqu'à une température inférieure à la température du fluide actif du premier étage et comprise entre 20 et 21,1 degrés Celsius (68 et 70 degrés F).

3. Système d'échange de chaleur de la revendication 1 dans lequel le premier fluide actif est refroidi jusqu'à l'état d'un liquide condensé dans le montage d'échange de chaleur du premier étage et le deuxième fluide actif est refroidi jusqu'à l'état d'un liquide condensé dans le montage d'échange de chaleur du deuxième étage, le fluide actif du deuxième étage condensé ayant une température supérieure à celle du fluide actif du premier étage condensé, en particulier dans lequel le premier fluide actif est refroidi jusqu'à une température comprise entre 5,6 et 7,8 degrés Celsius (42 et 46 degrés F), plus particulièrement dans lequel le fluide actif du deuxième étage est refroidi jusqu'à une température supérieure à celle du fluide actif du premier étage et comprise entre 7,2 et 8,3 degrés Celsius (45 et 47 degrés F).

4. Système d'échange de chaleur de la revendication 2 dans lequel le fluide non actif pénètre dans le montage d'échange de chaleur du premier étage à une première température et le fluide non actif pénètre dans le montage d'échange de chaleur du deuxième étage à une deuxième température, inférieure ou
dans lequel le fluide non actif pénètre dans le montage d'échange de chaleur du premier étage à une température comprise entre 3,3 et 6,7 degrés Celsius (38 et 44 degrés F) et quitte le montage d'échange de chaleur du deuxième étage à une température comprise entre 5,6 et 8,9 degrés Celsius (42 et 48 degrés F).

5. Système d'échange de chaleur de la revendication 1 dans lequel le rapport de débit du fluide non actif au fluide actif est supérieur à 2:1, en particulier dans lequel le rapport de débit du fluide non actif au fluide actif se situe entre 20:1 et 100:1.

6. Système d'échange de chaleur de la revendication 1 dans lequel les montages d'échange de chaleur du premier et du deuxième étage forment des armoires du premier et du deuxième étage (521, 522, 523, 524) et dans lequel le fluide non actif circule de la première armoire à la deuxième armoire sans pertes de pression dues à la tuyauterie.

7. Système d'échange de chaleur de la revendication 1 dans lequel les plaques à écoulement ouvert réduisent les pertes de pression dans la circulation du fluide actif dues à l'absence de buses et/ou de pénétrations de fluide non actif à travers la plaque.

8. Système d'échange de chaleur de la revendication 1 dans lequel le cheminement des fluides actifs comprend une première direction de circulation croisant le cheminement du fluide non actif et une deuxième direction de cheminement opposée à la première direction de cheminement.

9. Système d'échange de chaleur de la revendication 1 dans lequel les premier et deuxième fluides actifs sont des fluides actifs dans un système OTEC (310), en particulier dans lequel les premier et deuxième fluides actifs sont de l'ammoniac.

10. Système d'échange de chaleur de la revendication 1 dans lequel le fluide non actif est de l'eau brute.

11. Système d'échange de chaleur de la revendication 1 dans lequel les plaques à écoulement ouvert comprennent en outre des surfaces externes avant, arrière, supérieure et inférieure et le fluide non actif est en contact avec toutes les surfaces externes.

12. Système d'échange de chaleur de la revendication 1 dans lequel :
le montage du premier étage comprend en outre une pluralité de plaques à écoulement ouvert en alignement horizontal ayant un espace (1053) entre chaque plaque à l'intérieur du montage du premier étage ;
le montage du deuxième étage comprend en outre une pluralité de plaques à écoulement ouvert en alignement horizontal ayant un espace (1053) entre chaque plaque à l'intérieur du montage du deuxième étage ; et
la pluralité de plaques à écoulement ouvert et d'espaces entre celles-ci dans le montage du deuxième étage est alignée verticalement avec la pluralité de plaques à écoulement ouvert et d'espaces entre celles-ci dans le montage du premier étage pour réduire les pertes de pression dans la circulation du fluide non actif à travers les montages du premier et du deuxième étage, en particulier comprenant en outre un rail pour suspendre chaque plaque de la pluralité de plaques à écoulement ouvert et une pluralité de fentes pour maintenir la position horizontale de chaque plaque de la pluralité de plaques à écoulement ouvert.

13. Système d'échange de chaleur multi-étagé de la revendication 1 comprenant :
un montage d'échange de chaleur de troisième étage aligné verticalement avec le montage d'échange de chaleur du deuxième étage, le montage d'échange de chaleur du troisième étage comprenant une ou plusieurs plaques à écoulement ouvert comprenant une surface externe entourée par le fluide non actif et un passage interne en communication fluidique avec un troisième fluide actif circulant à travers le passage interne ;
un montage d'échange de chaleur de quatrième étage aligné verticalement avec le montage d'échange de chaleur du troisième étage, le montage d'échange de chaleur du quatrième étage comprenant une ou plusieurs plaques à écoulement ouvert comprenant une surface extérieure entourée par le fluide non actif et un passage interne en communication fluidique avec un quatrième fluide actif circulant à travers le passage interne ;
le fluide non actif circulant à travers le montage d'échange de chaleur du deuxième étage pour une interaction thermique avec le deuxième fluide actif avant de circuler à travers le montage d'échange de chaleur du troisième étage pour une interaction thermique avec le troisième fluide actif, et
le fluide non actif circulant à travers le montage d'échange de chaleur du troisième étage pour une interaction thermique avec le troisième fluide actif avant de circuler à travers le montage d'échange de chaleur du quatrième étage pour une interaction thermique avec le quatrième fluide actif.

14. Système d'échange de chaleur de la revendication 13 dans lequel : le premier fluide actif est chauffé jusqu'à l'état d'une vapeur ;
le deuxième fluide actif est chauffé jusqu'à l'état d'une vapeur ayant une température inférieure à celle du premier fluide actif à l'état de vapeur ;
le troisième fluide actif est chauffé jusqu'à l'état d'une vapeur ayant une température inférieure à celle du deuxième fluide actif ; et le quatrième fluide actif est chauffé jusqu'à l'état d'une vapeur ayant une température inférieure à celle du troisième fluide à l'état de vapeur, en particulier dans lequel : le premier fluide actif est chauffé jusqu'à une température comprise entre 20,6 et 21,7 degrés Celsius (69 et 71 degrés F);
le deuxième fluide actif est chauffé jusqu'à une température inférieure à celle du premier fluide actif et comprise entre 20 et 21,1 degrés Celsius (68 et 70 degrés F) ; le troisième fluide actif est chauffé jusqu'à une température inférieure à celle du deuxième fluide actif et comprise entre 18,9 et 20,6 degrés Celsius (66 et 69 degrés F) ; et
le quatrième fluide actif est chauffé jusqu'à une température inférieure à celle du troisième fluide actif et comprise entre 17,8 et 19,4 degrés Celsius (64 et 67 degrés F).

15. Système d'échange de chaleur de la revendication 13 dans lequel : le premier fluide actif est refroidi jusqu'à l'état d'un liquide condensé dans le montage d'échange de chaleur du premier étage ;
le deuxième fluide actif est refroidi jusqu'à l'état d'un liquide condensé dans le montage d'échange de chaleur du deuxième étage et a une température supérieure à celle du premier fluide actif condensé ;
le troisième fluide actif est refroidi jusqu'à l'état d'un liquide condensé dans le troisième montage d'échange de chaleur et a une température supérieure à celle du deuxième fluide actif condensé ; et
le quatrième fluide actif est condensé en un liquide dans le quatrième montage d'échange de chaleur et a une température supérieure à celle du troisième fluide actif condensé, en particulier dans lequel : le premier fluide actif est condensé jusqu'à une température comprise entre 5,6 et 7,8 degrés Celsius (42 et 46 degrés F) ;
le deuxième fluide actif est condensé jusqu'à une température supérieure à celle du premier fluide actif et comprise entre 7,2 et 8,3 degrés Celsius (45 et 47 degrés F) ;
le troisième fluide actif est condensé jusqu'à une température supérieure à celle du deuxième fluide actif et comprise entre 7,8 et 9,4 degrés Celsius (46 et 49 degrés F) ; et
le quatrième fluide actif est condensé jusqu'à une température supérieure à celle du troisième fluide actif et comprise entre 9,4 et 11,1 degrés Celsius (49 et 52 degrés F).

16. Système d'échange de chaleur de la revendication 13 dans lequel le fluide non actif circule du montage d'échange de chaleur du premier étage au montage d'échange de chaleur du deuxième étage, du montage d'échange de chaleur du deuxième étage au montage d'échange de chaleur du troisième étage, et du montage d'échange de chaleur du troisième étage au montage d'échange de chaleur du quatrième étage sans pertes de pression dues à la tuyauterie.

17. Système d'échange de chaleur de la revendication 13 dans lequel :
le montage du premier étage comprend en outre une pluralité de plaques à écoulement ouvert en alignement horizontal ayant un espace entre chaque plaque à l'intérieur du montage du premier étage ;
le montage du deuxième étage comprend en outre une pluralité de plaques à écoulement ouvert en alignement horizontal ayant un espace entre chaque plaque à l'intérieur du montage du deuxième étage ;
le montage du troisième étage comprend en outre une pluralité de plaques à écoulement ouvert en alignement horizontal ayant un espace entre chaque plaque à l'intérieur du montage du troisième étage ;
le montage du quatrième étage comprend en outre une pluralité de plaques à écoulement ouvert en alignement horizontal ayant un espace entre chaque plaque à l'intérieur du montage du quatrième étage ; et
la pluralité de plaques à écoulement ouvert et d'espaces à l'intérieur de chaque montage est alignée verticalement avec les plaques à écoulement ouvert et les espaces dans chacun des autres montages des autres étages de manière à réduire les pertes de pression dans la circulation du fluide non actif à travers les montages du premier et du deuxième étage.
